(19) **Europäisches Patentamt**
**European Patent Office**
**Office européen des brevets**

(11) **EP 4 672 497 A1**

(12) **EUROPEAN PATENT APPLICATION**
published in accordance with Art. 153(4) EPC

(43) Date of publication:
**31.12.2025 Bulletin 2026/01**

(21) Application number: **24819449.0**

(22) Date of filing: **08.03.2024**

(51) International Patent Classification (IPC):
**H01Q 1/24** (2006.01)   **H01Q 5/30** (2015.01)
**H04M 1/02** (2006.01)

(52) Cooperative Patent Classification (CPC):
**H01Q 1/24; H01Q 5/30; H04M 1/02**

(86) International application number:
**PCT/KR2024/003047**

(87) International publication number:
**WO 2024/253296 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.06.2023 KR 20230074489
20.07.2023 KR 20230094931**

(71) Applicant: **Samsung Electronics Co., Ltd.
Suwon-si, Gyeonggi-do 16677 (KR)**

(72) Inventors:
• **SEO, Junghoon
Suwon-si Gyeonggi-do 16677 (KR)**
• **LEE, Dohyeon
Suwon-si Gyeonggi-do 16677 (KR)**
• **LEE, Jeonghoon
Suwon-si Gyeonggi-do 16677 (KR)**
• **CHO, Joongyeon
Suwon-si Gyeonggi-do 16677 (KR)**

(74) Representative: **HGF
HGF Limited
4th Floor, 1 City Square
Leeds LS1 2AL (GB)**

(54) **ELECTRONIC DEVICE COMPRISING ANTENNA**

(57) This electronic device comprises: a housing comprising a first housing part and a second housing part; a wireless communication circuit; and a display. The first housing part comprises: a first non-conductive portion disposed between a first edge and a second edge; a first conductive portion disposed between the first edge and the first non-conductive portion; and a second conductive portion disposed between the second edge and the first non-conductive portion and used for communication with an external electronic device.

FIG. 5A

**Description**

**[Technical Field]**

The descriptions below relate to an electronic device including an antenna.

**[Background Art]**

An electronic device including a large-screen display may increase user utilization. As demand for a highly portable electronic device increases, the electronic device may include a deformable display. The deformable display may be slidably deformable. The electronic device may communicate with an external electronic device by using a part of a housing. For example, the housing may include a plurality of conductive portions separated from each other. The electronic device may communicate with the external electronic device by using at least one of a plurality of conductive portions separated from each other. The part of the housing used for communication with the external electronic device may surround at least a part of the display to protect the display.

The above-described information may be provided as a related art for the purpose of helping understand the present disclosure. No claim or determination is raised as to whether any of the above-described information may be applied as a prior art related to the present disclosure.

**[Disclosure]**

**[Technical Solution]**

An electronic device is provided. The electronic device may comprise a housing, a wireless communication circuit, and a display. The housing may include a first housing part and a second housing part movably coupled to the first housing part. The wireless communication circuit may be disposed within the housing. The display may include a first display area, and a second display area. The second display area may extend from the first display area. The second display area may be at least partially rollable into the first housing part based on the movement of the second housing part. The first housing part may comprise a first surface facing the direction of the first display area, a second surface opposite to the first surface, and a third surface between the first surface and the second surface. The first housing part may comprise a first non-conductive portion, a first conductive portion, and a second conductive portion. The first non-conductive portion may be disposed between the first edge of the third surface in contact with the first surface and the second edge of the third surface in contact with the second surface. The first conductive portion may be disposed between the first edge and the first non-conductive portion. The second conductive portion may be disposed between the second edge and the first non-conductive portion. The wireless communication circuit may be configured to communicate with an external electronic device through the second conductive portion.

An electronic device is provided. The electronic device may comprise a housing, a wireless communication circuit, and a display. The housing may include a first housing part and a second housing part movably coupled to the first housing part in a first direction and in a second direction opposite to the first direction. The wireless communication circuit may be disposed within the housing. The display may be at least partially rollable into the first housing part based on the movement of the second housing part. The first housing part may comprise a first surface facing the direction of the display exposed to the outside of the first housing, a second surface opposite to the first surface, and a third surface facing the second direction. At least a part of the display may be expanded as the second housing part moves in the first direction, may be contracted as the second housing part moves in the second direction, and may be covered by the first surface, the second surface, and the third surface. The first housing part may comprise a first non-conductive portion, a first conductive portion, and a second conductive portion. The first non-conductive portion may be disposed between the first edge of the third surface in contact with the first surface and the second edge of the third surface in contact with the second surface. The first non-conductive portion may be parallel to the first edge and the second edge. The first conductive portion may be disposed between the first edge and the first non-conductive portion. The second conductive portion may be disposed between the second edge and the first non-conductive portion. The wireless communication circuit may be configured to communicate with an external electronic device through the second conductive portion.

**[Description of the Drawings]**

FIG. 1 is a block diagram illustrating an electronic device 101 in a network environment 100 according to various embodiments.

FIG. 2A is a top plan view of an exemplary electronic device in a first state.

FIG. 2B is a bottom view of an exemplary electronic device in a first state.

FIG. 2C is a top plan view of an exemplary electronic device in a second state.

FIG. 2D is a bottom view of an exemplary electronic device in a second state.

FIGS. 3A and 3B are exploded perspective views of an exemplary electronic device.

FIG. 4A is a cross-sectional view of an exemplary electronic device in a first state.

FIG. 4B is a cross-sectional view of an exemplary electronic device in a second state.

FIG. 5A illustrates an exemplary electronic device.

FIG. 5B is a cross-sectional view of an exemplary electronic device cut along C-C' of FIG. 5A.

FIG. 5C illustrates an exemplary electronic device.

FIG. 6A is an exploded perspective view of some components of an exemplary electronic device.

FIG. 6B illustrates an exemplary electronic device in a first state.

FIG. 6C illustrates an exemplary electronic device in a second state.

FIG. 7A illustrates a third surface of an exemplary first housing part.

FIG. 7B is a perspective view of an exemplary first housing part from which a connecting structure is omitted.

FIG. 7C is a perspective view of an exemplary first housing part including a connecting structure.

FIG. 7D is a cross-sectional view of an exemplary first housing part cut along D-D' of FIG. 7C.

FIG. 8A illustrates an E-(electric) field formed in a third surface while an exemplary electronic device communicates with an external electronic device.

FIG. 8B illustrates an E-(electric) field formed on a first conductive portion and a second conductive portion while an exemplary electronic device communicates with an external electronic device.

FIG. 9 is a graph showing a radiation characteristic of an electronic device.

FIGS. 10A, 10B, 10C, and 10D illustrate an exemplary third surface.

FIG. 11 illustrates a part of an exemplary first housing part.

FIG. 12A illustrates a second surface of an exemplary first housing part.

FIGS. 12B and 12C are cross-sectional views of an exemplary first housing part cut along E-E' of FIG. 12A.

FIG. 13A illustrates a second surface of an exemplary first housing part.

FIGS. 13B and 13C are cross-sectional views of an exemplary first housing part cut along F-F' of FIG. 13A.

## [Mode for Invention]

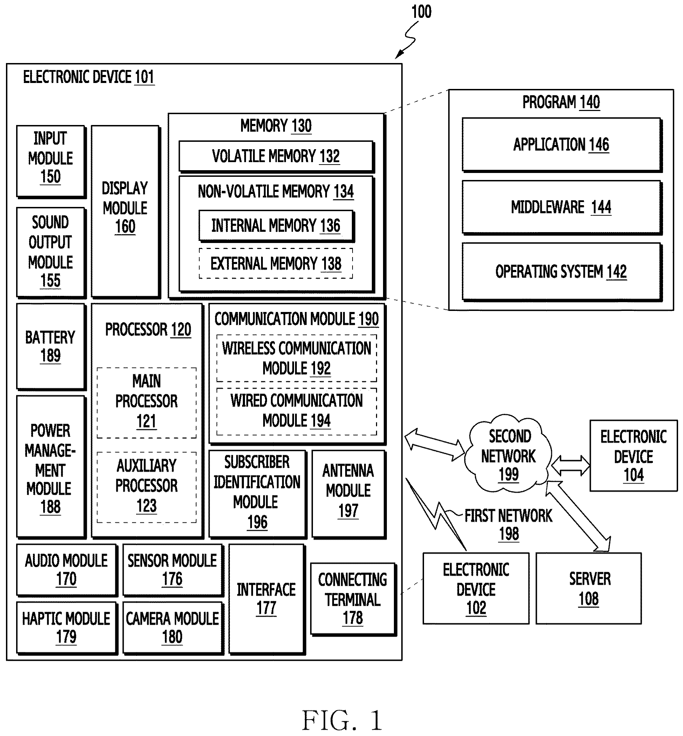

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

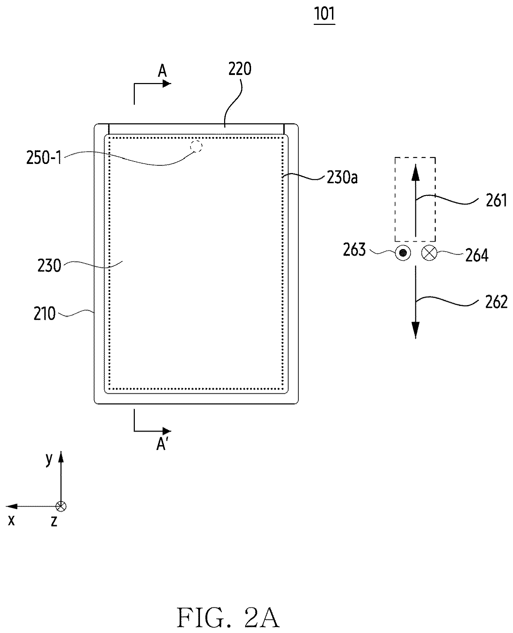

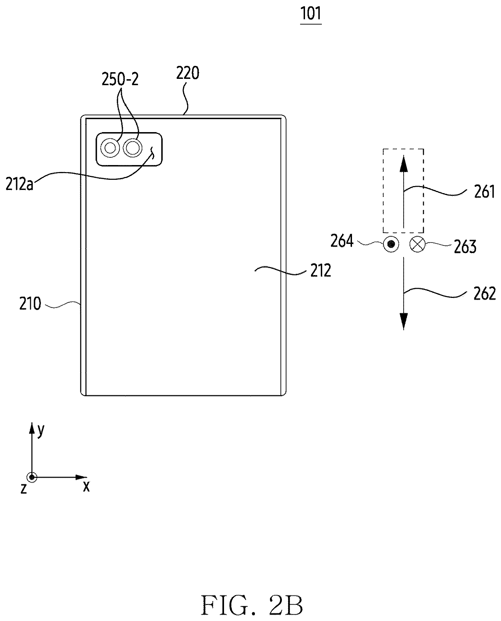

For example, a display of the display module 160 may be flexible. For example, the display may include a display area exposed outside a housing of the electronic device 101 that provides at least a part of an outer surface of the electronic device 101. For example, since the display has flexibility, at least a part of the display may be rollable into the housing or slidable into the housing. For example, a size of the display area may be changed depending to a size of the at least a part of the display rolled into the housing or slid into the housing. For example, the electronic device 101 including the display may be in a plurality of states including a first state providing the display area having a first size and a second state providing the display area having a second size different from the first size. For example, the first state may be exemplified through a description of FIGS. 2A and 2B.

FIG. 2A is a top plan view of an exemplary electronic device in a first state.

Referring to FIG. 2A, the electronic device 101 may include a housing 201 and a display 230. The housing 201 extends along a first axis (e.g., X-axis) to define a width, a second axis (e.g., Y-axis) orthogonal to the first axis to define a length, and third axis (e.g., Z-axis) orthogonal to the first and second axes to define a thickness. According to a non-limiting embodiment, the housing 201 may include a first housing part 210 and a second housing part 220 movable with respect to the first housing part 210 in a first direction 261 parallel to the y axis or in a second direction 262 parallel to the y axis and opposite to the first direction 261. Although the second housing part 220 is described to be moved with respect to the first housing part 210 in the present disclosure, the present disclosure is not limited thereto. For example, the housing 201 may have a structure in which an overall size of the housing 201 may be changed according to a change in a relative positional relationship between the first housing part 210 and the second housing part 220. For example, the relative positional relationship between the first housing part 210 and the second housing part 220 may be changed by an operation of a motor 361, which will be described later. For example, by the motor 361, the first housing part 210 or the second housing part 220 may be movable, or both the first housing part 210 and the second housing part 220 may be movable.

For example, the electronic device 101 may be in the first state. For example, in the first state, the second housing part 220 may be movable with respect to the first housing part 210 in the first direction 261 among the first direction 261 and the second direction 262. For example, in the first state, the second housing part 220 may not be movable in the second direction 262 with respect to the first housing part 210.

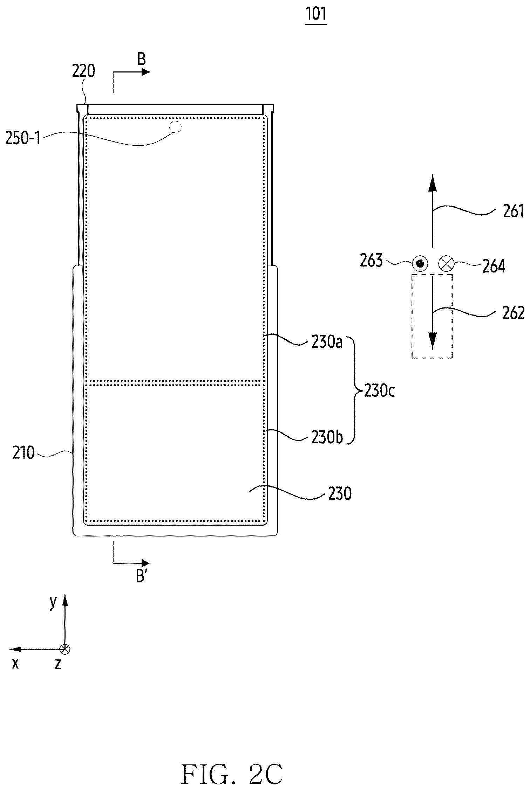

For example, in the first state, the display 230 may provide the display area having the smallest size. For example, in the first state, the display area may correspond to an area 230a, referred to herein as a first display area 230. According to a non-limiting embodiment, a portion of the first display area 230a is coupled to the second housing part 220. Although not illustrated in FIG. 2A, in the first state, an area of the display 230 (e.g., an area 230b of FIG. 2C) different from the area 230a, which is the display area, may be included in the first housing part 210. For example, in the first state, the area (e.g., the area 230b of FIG. 2C) may be covered by the first housing part 210. For example, in the first state, the area may be rollable into the first housing part 210. For example, in the first state, the area 230a may include a planar portion. However, it is not limited to thereto. For example, in the first state, the area 230a may include a curved portion extending from the planar portion and located in an edge portion.

For example, the first state may be referred to as a slide-in state or a closed state in terms of at least a part of the second housing part 220 being located in the first housing part 210. For example, the first state may be referred to as a contracted state in terms of providing the display area having the smallest size. However, it is not limited thereto.

For example, the second housing part 220 may include a first image sensor 250-1 in the camera module 180 exposed through a part of the area 230a and facing a third direction 263 parallel to a z-axis. For example, although not illustrated in FIG. 2A, the second housing part 220 may include one or more second image sensors in the camera module 180 exposed through a part of the second housing part 220 and facing a fourth direction 264 parallel to the z-axis and opposite the third direction 263. For example, the one or more second image sensors may be exemplified through a description of FIG. 2B.

FIG. 2B is a bottom view of an exemplary electronic device in a first state.

Referring to FIG. 2B, in the first state, one or more second image sensors 250-2 disposed in a second housing part 220 may be located within a structure disposed in a first housing part 210 for the one or more second image sensors 250-2. For example, in the first state, light from outside of an electronic device 101 may be received by the one or more second image sensors 250-2 through the structure. For example, since the one or more second image sensors 250-2 are located within the structure in the first state, the one or more second image sensors 250-2 may be exposed through the structure in the first state. For example, the structure may be implemented in various ways. For example, the structure may be an opening or a notch. For example, the structure may be an opening 212a in a first plate 212 of the first housing part 210 surrounding at least a part of the second housing part 220. However, it is not limited thereto. For example, in the first state, the one or more second image sensors 250-2 included in the second housing part 220 may be covered by the first plate 212 of the first housing part 210.

For example, the first state may be changed to the second state.

For example, the first state (or the second state) may be changed to the second state (or the first state) through intermediate states between the first state and the second state.

For example, the first state (or the second state) may be changed to the second state (or the first state) based on a user input. For example, the first state (or the second state) may be changed to the second state (or the first state) in response to a user input to a physical button exposed through a part of the first housing part 210 or a part of the second housing part 220. For example, the first state (or the second state) may be changed to the second state (or the first state) in response to a touch input for an executable object displayed in the display area. For example, the first state (or the second state) may be changed to the second state (or the first state) in response to a touch input having a contact point on the display area and having a pressing strength greater than or equal to a reference strength. For example, the first state (or the second state) may be changed to the second state (or the first state) in response to a voice input received through a microphone of the electronic device 101. For example, the first state (or the second state) may be changed to the second state (or the first state) in response to an external force applied to the first housing part 210 and/or the second housing part 220 to move the second housing part 220 with respect to the first housing part 210. For example, the first state (or the second state) may be changed to the second state (or the first state) in response to a user input identified in an external electronic device (e.g., earbuds or smart watch) connected to the electronic device 101. However, it is not limited thereto.

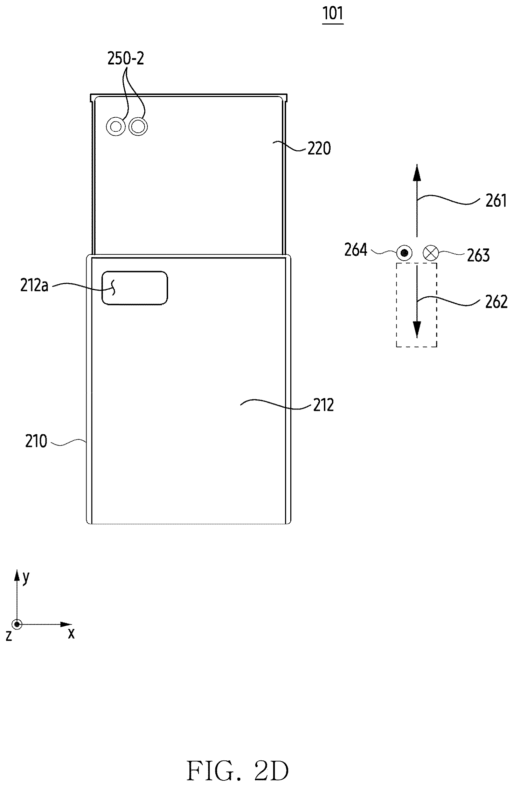

The second state may be exemplified through a description of FIGS. 2C and 2D.

FIG. 2C is a top plan view of an exemplary electronic device in a second state.

Referring to FIG. 2C, an electronic device 101 may be in the second state. For example, in the second state, a second housing part 220 may be displaced along the second axis (e.g., the Y-axis). For example, the second housing part 220 may be movable (e.g., along the Y-axis) with respect to a first housing part 210 in a second direction 262 among a first direction 261 and the second direction 262. For example, in the second state, the second housing part 220 may not be movable in the first direction 261 with respect to the first housing part 210.

For example, in the second state, a display 230 may provide the display area having the largest size. For example, in the second state, the display area may correspond to an area 230c including an area 230a and an area 230b. For example, the area 230b that was included in the first housing part 210 in the first state may be exposed in the second state. For example, in the second state, the area 230a may include a planar portion. However, it is not limited thereto. For example, the area 230a may include a curved portion extending from the planar portion and located in an edge portion. For example, in the second state, the area 230b may include the planar portion among the planar portion and the curved portion, unlike the area 230a in the first state. However, it is not limited thereto. For example, the area 230b may include the curved portion extending from the planar portion of the area 230b and located in the edge portion.

For example, the second state may be referred to as a slide-out state or an open state in terms of at least a part of the second housing part 220 disposed outside the first housing part 210 extending with respect to the first state. For example, the second state may be referred to as an expanded state in terms of providing the display area having the largest size. However, it is not limited thereto.

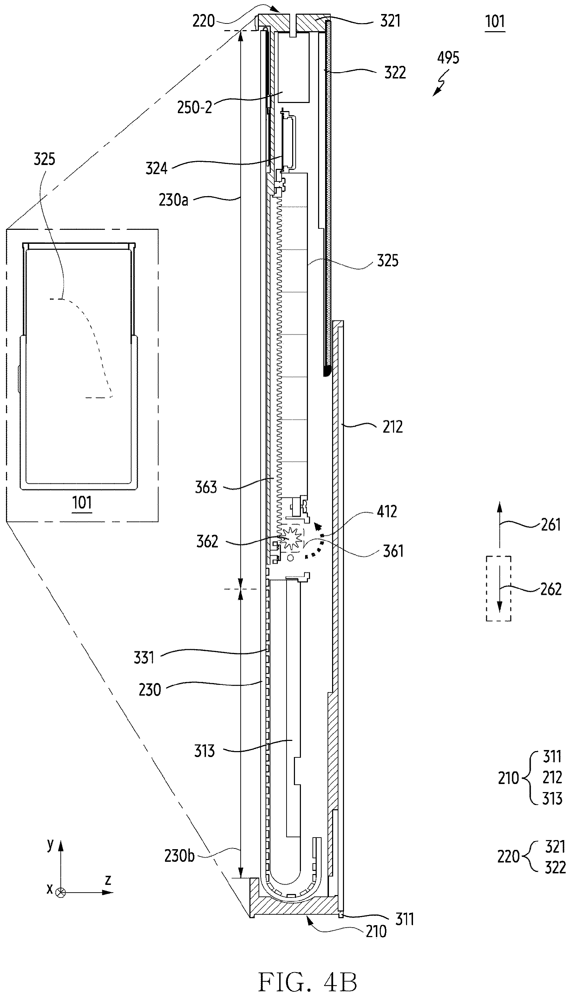

For example, when a state of the electronic device 101 changes from the first state to the second state, a first image sensor 250-1 facing a third direction 263 may be moved together with the area 230a according to movement of the second housing part 220 in the first direction 261. For example, although not illustrated in FIG. 2C, one or more second image sensors 250-2 facing a fourth direction 264 may be moved according to the movement of the second housing part 220 in the first direction 261 when the state of the electronic device 101 is changed from the first state to the second state. For example, a relative positional relationship between the one or more second image sensors 250-2 and a structure exemplified through a description of FIG. 4B may be changed according to movement of the one or more second image sensors 250-2. For example, the change in the relative positional relationship may be exemplified through FIG. 2D.

FIG. 2D is a bottom view of an exemplary electronic device in a second state.

Referring to FIG. 2D, in the second state, one or more second image sensors 250-2 may be located outside the structure. For example, the structure may include an opening 212a. For example, in the second state, the one or more second image sensors 250-2 may be located outside the opening 212a in a first plate 212. For example, the one or more second image sensors 250-2 may be exposed through the opening 212a in a first state. For example, since the one or more second image sensors 250-2 are located outside a first housing part 210 in the second state, the one or more second image sensors 250-2 may be exposed in the second state. For example, since the one or more second image sensors 250-2 are located outside the structure in the second state, the relative positional relationship in the second state may be different from the relative positional relationship in the first state.

For example, in case that the electronic device 101 does not include the structure such as the opening 212a, the one or more second image sensors 250-2 may be exposed in the second state among the first state and the second state.

Although not illustrated in FIGS. 2A, 2B, 2C, and 2D, the electronic device 101 may be in an intermediate state between the first state and the second state. For example, a size of the display area in the intermediate state may be larger than a size of the display area in the first state and smaller than a size of the display area in the second state. For example, the display area in the intermediate state may correspond to an area including an area 230a and a part of an area 230b. For example, in the intermediate state, a part of the area 230b is exposed, and another part (or remaining part) of the area 230b may be covered by the first housing part 210 or may be rollable into the first housing part 210. However, it is not limited thereto.

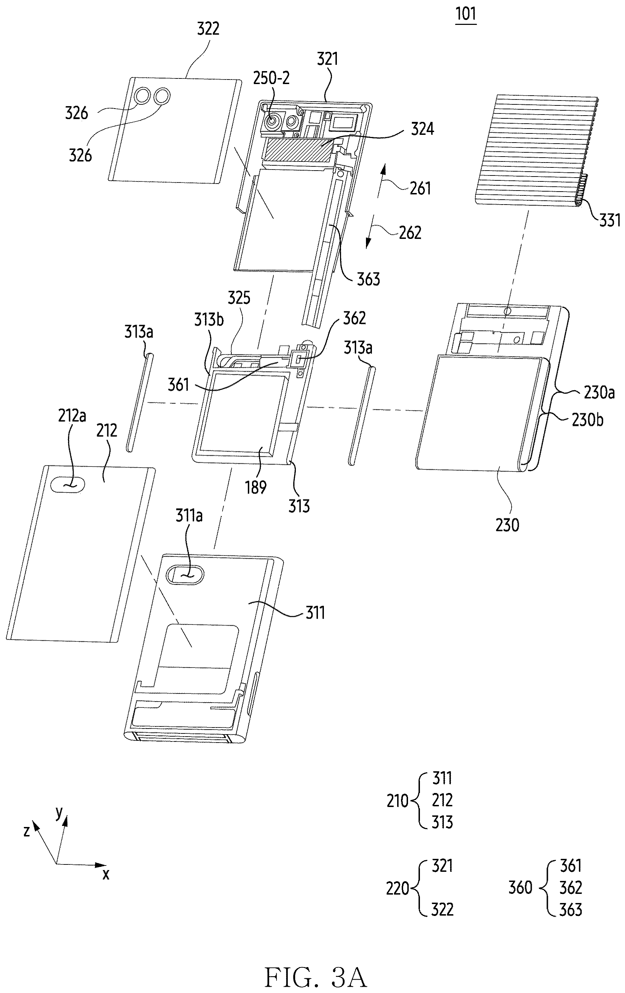

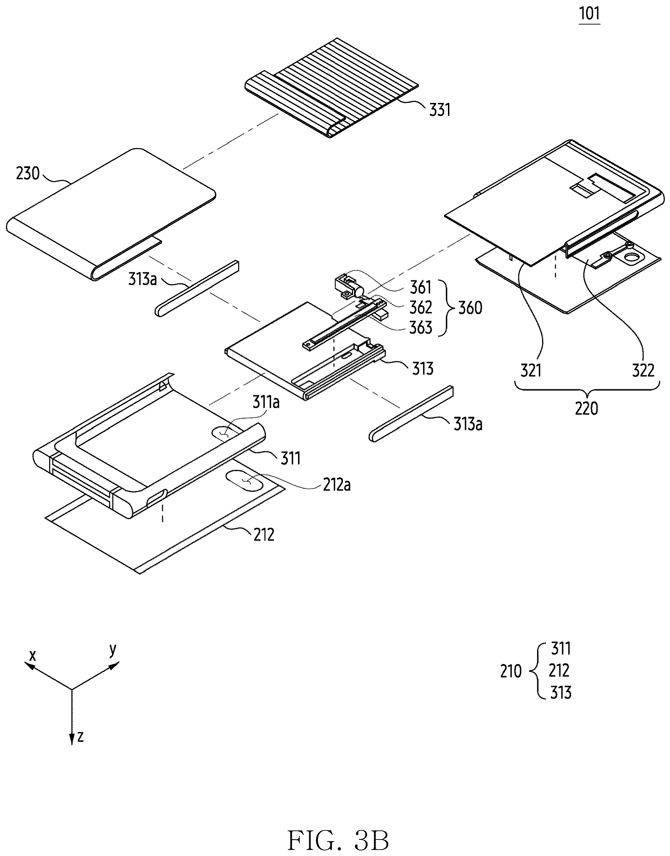

Referring again to FIG. 1, the electronic device 101 may include structures for moving a second housing (e.g., a second housing part 220 of FIG. 2A) of the electronic device 101 with respect to a first housing (e.g., the first housing part 210 of FIG. 2A) of the electronic device 101. For example, the structures may be exemplified through the description of FIGS. 3A and 3B.

FIGS. 3A and 3B are exploded perspective views of an exemplary electronic device.

Referring to FIGS. 3A and 3B, an electronic device 101 may include a first housing part 210, a second housing part 220, a display 230, and a driving unit 360.

For example, the first housing part 210 may include a first cover 311, a first plate 212, and a frame 313.

For example, the first cover 311 may at least partially form a side surface portion of an outer surface of the electronic device 101. For example, the first cover 311 may include an opening 311a for one or more second image sensors 250-2. For example, the first cover 311 may include a surface supporting the first plate 212. For example, the first cover 311 may be coupled to the first plate 212. For example, the first cover 311 may include the frame 313. For example, the first cover 311 may be coupled to the frame 313.

For example, the first plate 212 may at least partially form a rear surface portion of the outer surface. For example, the first plate 212 may include an opening 212a for the one or more second image sensors 250-2. For example, the first plate 212 may be disposed on the surface of the first cover 311. The opening 212a may be aligned with the opening 311a.

For example, the frame 313 may be at least partially surrounded by the first cover 311.

For example, the frame 313 may be at least partially surrounded by the display 230. For example, the frame 313 is at least partially surrounded by the display 230, but a position of the frame 313 may be maintained independently of movement of the display 230. For example, the frame 313 may be arranged in relation to at least some of the components of the display 230. For example, the frame 313 may include rails 313a that provide (or guide) a path of movement of at least one component of the display 230.

For example, the frame 313 may be coupled with at least one component of the electronic device 101. For example, the frame 313 may support a battery 189. For example, the battery 189 may be supported through a recess or a hole in a surface 313b of the frame 313. For example, the frame 313 may be coupled with one end of a flexible printed circuit board (FPCB) 325 on a surface of the frame 313. For example, although not explicitly illustrated in FIGS. 3A and 3B, another end of the FPCB 325 may be connected to a PCB 324 through at least one connector. For example, the PCB 324 may be electrically connected to another PCB (not illustrated in FIGS. 3A and 3B) that supplies power to a motor 361 through the FPCB 325.

For example, the frame 313 may be coupled with at least one structure of the electronic device 101 for a plurality of states including the first state and the second state. For example, the frame 313 may fasten the motor 361 of the driving unit 360.

For example, the second housing part 220 may include a second cover 321 and a second plate 322.

For example, the second cover 321 may be at least partially surrounded by the display 230. For example, the second cover 321 may be coupled with at least a part of an area 230a of the display 230 surrounding the second cover 321, unlike the frame 313, so that the display 230 is moved according to the second housing part 220 that is moved with respect to the first housing part 210.

For example, the second cover 321 may be coupled with the at least one component of the electronic device 101. For example, the second cover 321 may support the printed circuit board (PCB) 324 including components of the electronic device 101. For example, the PCB 324 may include a processor 120 (not illustrated in FIGS. 3A and 3B). For example, the second cover 321 may support the one or more second image sensors 250-2.

For example, the second cover 321 may be coupled with at least one structure of the electronic device 101 for a plurality of states including the first state and the second state. For example, the second cover 321 may fasten a rack gear 363 of the driving unit 360.

For example, the second cover 321 may be coupled with the second plate 322.

For example, the second plate 321 may be coupled with the second cover 321 in order to protect at least one component of the electronic device 101 coupled into the second cover 321 and/or at least one structure of the electronic device 101 coupled into the second cover 321. For example, the second plate 322 may include a structure for the at least one component. For example, the second plate 322 may include one or more openings 326 for the one or more second image sensors 250-2. For example, the one or more openings 326 may be aligned with the one or more second image sensors 250-2 disposed on the second cover 321. For example, a size of each of the one or more openings 326 may correspond to a size of each of the one or more second image sensors 250-2. For example, when viewing the electronic device 101 from above in a state that the first plate 212 of the electronic device 101 is disposed to face a +z direction, the electronic device 101 may have a structure stacked in an order of the first plate 212, the first cover 311, and the frame 313.

For example, the electronic device 101 may include a support member 331 for supporting at least a part of the display 230. For example, the support member 331 may include a plurality of bars. For example, the plurality of bars may be coupled to each other. The support member 331 may support an area 230b of the display 230.

For example, the driving unit 360 may include the motor 361, a pinion gear 362, and the rack gear 363.

For example, the motor 361 may operate based on power from the battery 189. For example, the power may be provided to the motor 361 in response to the user input.

For example, the pinion gear 362 may be coupled with the motor 361 through a shaft. For example, the pinion gear 362 may be rotated based on the operation of the motor 361 transmitted through the shaft.

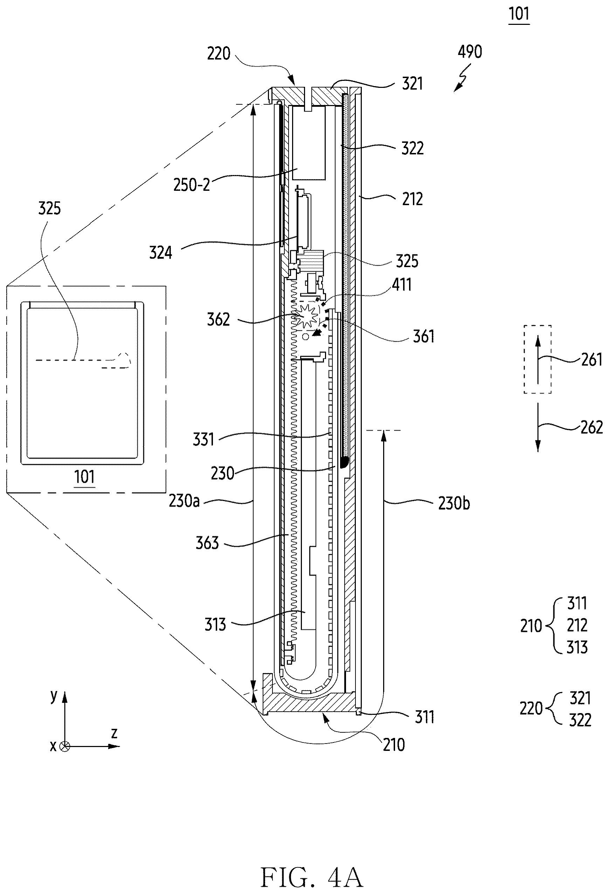

For example, the rack gear 363 may be arranged in relation to the pinion gear 362. For example, teeth of the rack gear 363 may engage with teeth of the pinion gear 362. For example, the rack gear 363 may be moved in a first direction 261 or a second direction 262 according to the rotation of the pinion gear 362. For example, the second housing part 220 may be moved in the first direction 261 and the second direction 262 by the rack gear 363 that is moved according to the rotation of the pinion gear 362 due to the operation of the motor 361. For example, the first state of the electronic device 101 may be changed to a state (e.g., the one or more intermediate states or the second state) different from the first state through the movement of the second housing part 220 in the first direction 261. For example, the second state of the electronic device 101 may be changed to a state (e.g., the one or more intermediate states or the first state) different from the second state through the movement of the second housing part 220 in the second direction 262. For example, that the first state is changed to the second state by the driving unit 360 and that the second state is changed to the first state by the driving unit 360 may be exemplified through FIGS. 4A and 4B.

FIG. 4A is a cross-sectional view of an exemplary electronic device in a first state. FIG. 4B is a cross-sectional view of an exemplary electronic device in a second state.

For example, FIG. 4A is a cross-sectional view of the exemplary electronic device 101 cut along A-A' of FIG. 2A. For example, FIG. 4B is a cross-sectional view of the exemplary electronic device 101 cut along C-C' of FIG. 2C.

Referring to FIGS. 4A and 4B, a motor 361 may be operated based at least in part on the above-defined user input received in a state 490, which is the first state. For example, a pinion gear 362 may be rotated in a first rotation direction 411 based at least in part on the operation of the motor 361. For example, a rack gear 363 may be moved in a first direction 261 based at least in part on the rotation of the pinion gear 362 in the first rotation direction 411. For example, since a second cover 321 in a second housing part 220 fastens the rack gear 363, the second housing part 220 may be moved in the first direction 261 based at least in part on the movement of the rack gear 363 in the first direction 261. For example, since the second cover 321 in the second housing part 220 is coupled with at least a part of an area 230a of a display 230 and fastens the rack gear 363, the display 230 may be moved based at least part on the movement of the rack gear 363 in the first direction 261. For example, the display 230 may be moved along rails 313a. For example, a shape of at least some of the plurality of bars of a support member 331 of the display 230 may be changed when the state 490 is changed to a state 495, which is the second state.

For example, an area 230b of the display 230 may be moved according to the movement of the display 230. For example, the area 230b may be moved through a space between a first cover 311 and a frame 313 when the state 490 is changed to the state 495 according to the above-defined user input. For example, the area 230b in the state 495 may be exposed, unlike the area 230b rolled into the space in the state 490.

For example, the second cover 321 in the second housing part 220 is coupled with at least a part of the PCB 324 connected to the other end of the FPCB 325 and the rack gear 363, and a shape of the FPCB 325 may be changed when the state 490 is changed to the state 495. For example, that the second cover 321 is coupled with the PCB 324 may be referred to a structure in which the PCB 324 disposed in the second cover 321 is fixed at a designated position in the second cover 321.

The motor 361 may operate based at least in part on the above-defined user input received in the state 495. For example, the pinion gear 362 may be rotated in a second rotation direction 412 based at least in part on the operation of the motor 361. For example, the rack gear 363 may be moved in a second direction 262 based at least in part on the rotation of the pinion gear 362 in the second rotation direction 412. For example, since the second cover 321 in the second housing part 220 fastens the rack gear 363, the second housing part 220 may be moved in the second direction 262 based at least in part on the movement of the rack gear 363 in the second direction 262. For example, since the second cover 321 in the second housing part 220 is coupled with at least part of the area 230a of the display 230 and fastens the rack gear 363, the display 230 may be moved based at least part on the movement of the rack gear 363 in the second direction 262. For example, the display 230 may be moved along the rails 313a. For example, the shape of at least some of the plurality of bars of the support member 331 of the display 230 may be changed when the state 495 is changed to the state 490. The support member 331 may be moved with respect to a first housing part 210. The support member 331 stored inside the first housing part 210 in the state 490 may be located between the first cover 311 and the frame 313. The display 230 may be moved with respect to the first housing part 210 according to the movement of the support member 331.

For example, the area 230b of the display 230 may be moved according to the movement of the display 230. For example, when the state 495 is changed to the state 490 according to the above-defined user input, the area 230b may be moved through a space between the first cover 311 and the frame 313. For example, the area 230b in the state 490 may be rolled into the space, unlike the area 230b exposed in the state 495.

For example, the second cover 321 of the second housing part 220 is coupled with at least a part of the PCB 324 connected to the other end of the FPCB 325 and the rack gear 363, and the shape of the FPCB 325 may be changed when the state 495 is changed to the state 490.

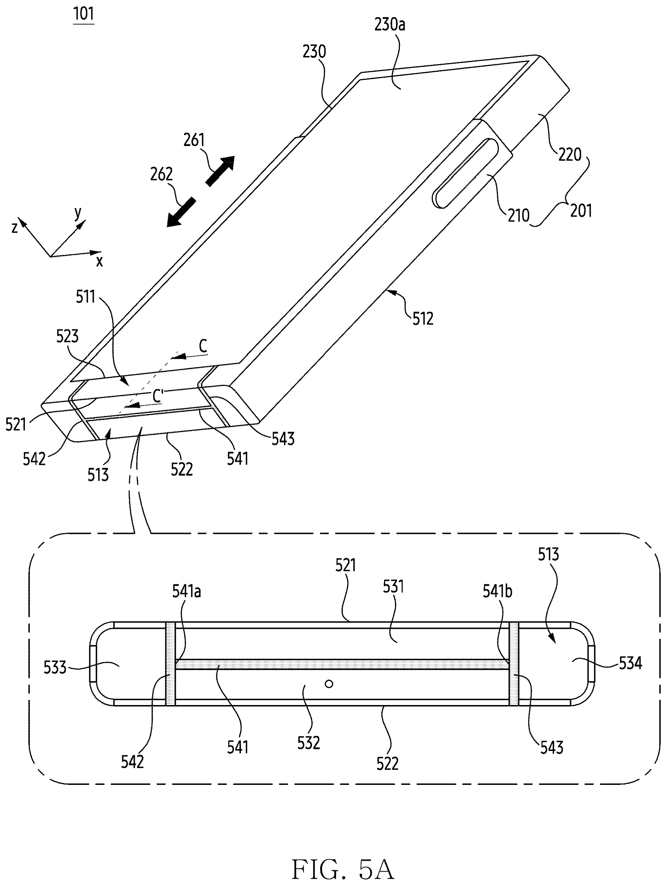

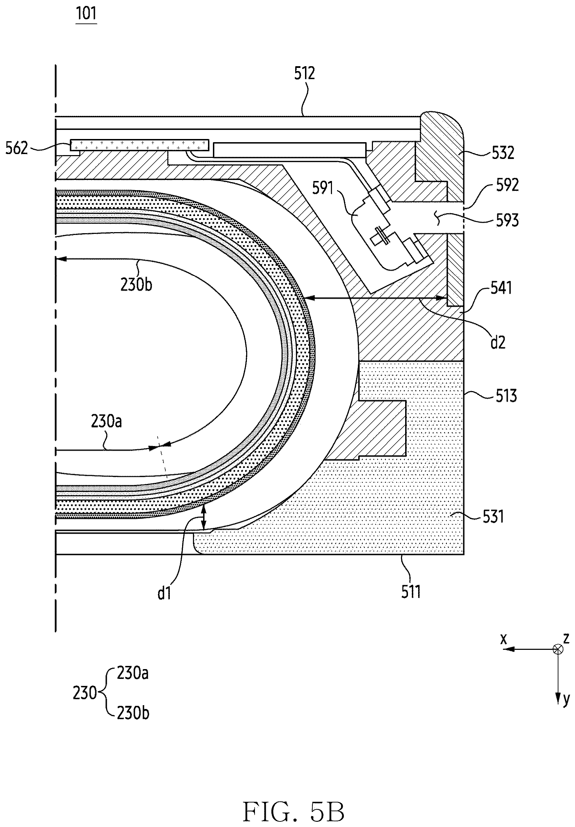

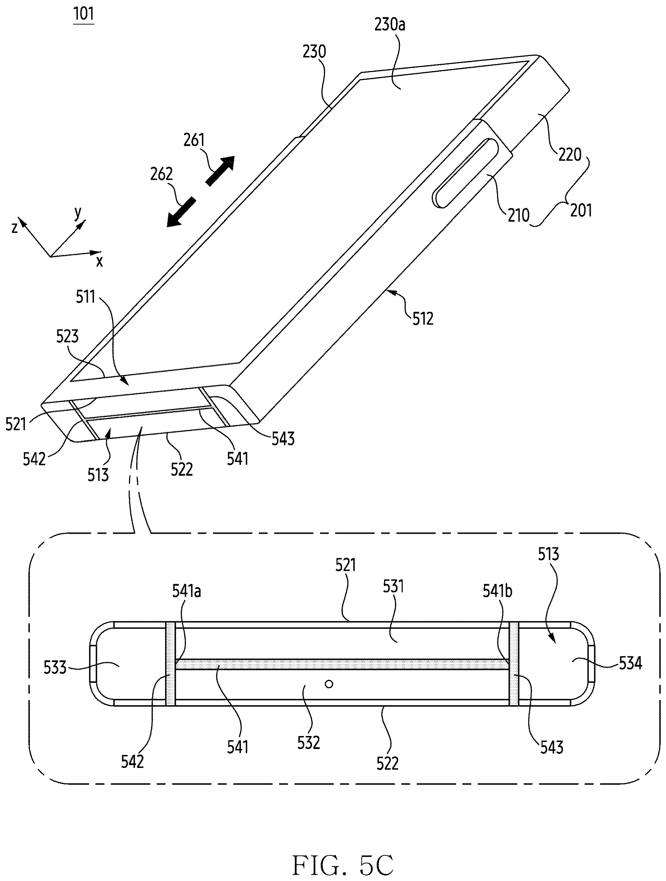

FIG. 5A illustrates an exemplary electronic device. FIG. 5B is a cross-sectional view of an exemplary electronic device cut along C-C' of FIG. 5A. FIG. 5C illustrates an exemplary electronic device.

In the present disclosure, a relative term such as a front surface, a rear surface, above, under, one side, and/or another side may be used to describe a relative position between components. For example, in case that an electronic device illustrated in a drawing is turned upside down, the front surface and the rear surface may be interchanged. For example, in case that the electronic device illustrated in the drawing is turned upside down, the "above" and the "under" may be interchanged. For example, in case that the electronic device illustrated in the drawing is turned upside down, the one side and the other side may be interchanged.

Referring to FIGS. 5A and 5B, an exemplary electronic device 101 may include a housing 201, a wireless communication circuit (e.g., a wireless communication module 192 of FIG. 1), and a display 230.

For example, the housing 201 may include a first housing part 210 and a second housing part 220 that are movably coupled to each other. For example, the second housing part 220 may be movably coupled to the first housing part 210. For example, the second housing part 220 may be movably coupled to the first housing part 210 and can move (e.g., along the Y-axis) in a first direction 261 and a second direction 262. The first housing part 210 and the second housing part 220 may be referred to as the first housing part 210 and the second housing part 220 described with reference to FIGS. 2A to 4B. A state (e.g., a slide-in state) in which the second housing part 220 is movable in the first direction 261 may be referred to as a first state illustrated in FIGS. 2A to 4B. A state (e.g., a slide-out state) in which the second housing part 220 is movable in the second direction 262 may be referred to as a second state illustrated in FIGS. 2B and 4B.

For example, the display 230 may include a first display area 230a and a second display area 230b. The first display area 230a may be a portion of the display 230 that may always be visually recognized from outside, independent of a state of the electronic device 101. For example, regardless of whether the electronic device 101 is in the first state or the second state, the first display area 230a may be a flat planar portion. The second display area 230b may be a rollable portion that may be at least partially deformed according to movement of the second housing part 220. For example, the display 230 may be supported by the second housing part 220. The display 230 may be configured to move based on the movement of the second housing part 220. According to a non-limiting embodiment, the first housing part 210 and the second housing part 220 move toward one another as the display 230 is rolled (e.g., contracted) into the first state and move away from one another as the display 230 is rolled (e.g., expanded) into the second state.

In the first state, at least a part of the second display area 230b may be rollable into the first housing part 210. In the second state, the at least a part of the second display area 230b may be unfolded. As the display 230 moves, a position of the second display area 230b may be changed. For example, in the first state, the second display area 230b may be located inside the first housing part 210. For example, in the second state, the at least a part of the second display area 230b may be located outside the first housing part 210. When the second display area 230b is located outside the first housing part 210, the second display area 230b is unfolded, so that a display area of the display 230 may be expanded. For example, the first display area 230a may be referred to as the above-described area (e.g., the area 230a of FIG. 2A), and the second display area 230b may be referred to as the above-described area (e.g., the area 230b of FIG. 2C).

The first housing part 210 may cover the at least a part of the second display area 230b. For example, in the first state, the at least a part of the second display area 230b may be rollable into the first housing part 210, and the first housing part 210 may surround the at least a part of the second display area 230b. As illustrated in FIGS. 5A and 5B, the first housing part 210 may include a first surface 511, a second surface 512, and a third surface 513.

For example, the first surface 511 may face a direction of the first display area 230a. Since the first display area 230a is exposed to outside of the electronic device 101 independently of the state of the electronic device 101, the direction of the first display area 230a may be a +z direction. For example, the +z direction may be referred to as a front direction of the electronic device 101, but is not limited thereto. The first surface 511 may be referred to as a surface (e.g., the front surface) of the first housing part 210 facing the direction (e.g., the +z direction) of the first display area 230a.

For example, the second surface 512 may be opposite to the first surface 511. For example, the second surface 512 may be referred to as a surface (e.g., the rear surface) of the first housing part 210 facing a -z direction. A second substrate 562 to be described later may be supported by the second surface 512. For example, the second substrate 562 may be electrically connected to an electronic component (e.g., a microphone 591) in the first housing part 210. For example, the first housing part 210 may include a microphone hole 592 and a duct 593 for the microphone 591. The microphone 591 may be configured to convert an analog signal (e.g., a sound wave) received from the outside of the electronic device 101 into an electrical signal (e.g., an audio signal). The microphone hole 592 may be an inlet through which the sound wave of the outside the electronic device 101 flow into inside of the electronic device 101. For example, the duct 593 may provide an acoustic path so that the sound wave flowed through the microphone hole 592 may be transmitted to the microphone 591, by extending from the microphone hole 592 to the microphone 591.

For example, since the first housing part 210 surrounds at least a part (e.g., the second display area 230b) of the display 230, a disposition structure of the duct 593 may be limited. For example, in order for the second housing part 220 to be movably coupled to the first housing part 210, the first housing part 210 may include a space for accommodating the second housing part 220 and at least a part of the display 230. For example, the first housing part 210 may include a recess 210a for accommodating the second housing part 220 and the at least a part of the display 230. For example, the second housing part 220 and the at least a part of the display 230 may be disposed in the recess 210a. Since the first housing part 210 includes the recess 210a, a space of the first housing part 210 for securing a length of the duct 593 may be insufficient. For example, when the duct 593 extends from the microphone hole 592 formed in the third surface 513, the length of the duct 593 may be limited by the recess 210a. In case that the microphone hole 592 is formed in a first conductive portion 531 relatively close to the display 230, it may be difficult to secure the length of the duct 593, and a space for mounting the microphone 591 may be insufficient. According to an embodiment, in order to secure the length of the duct 593, the microphone hole 592 may be formed in a second conductive portion 532 relatively far from the display 230.

For example, the first surface 511 may have a small area to expose the at least a part of the display 230. For example, an area of the first surface 511 may be narrower than an area of the third surface 513 so that a part of the display 230 may be exposed to the outside of the electronic device 101.

For example, the third surface 513 may be disposed between the first surface 511 and the second surface 512. For example, the third surface 513 may be referred to as a surface (e.g., bottom surface) of the first housing part 210 facing a -y direction. For example, the third surface 513 may be a surface of the first housing part 210 facing the second direction 262 in which the second housing part 220 is flowed into the first housing part 210.

As the display 230 moves, the second display area 230b may be rolled into the first housing part 210 or may move from inside of the first housing part 210 to outside of the first housing part 210. In the first state in which the second display area 230b is rolled into the first housing part 210 as much as possible, the second display area 230b may not be exposed to the outside by being covered by the first surface 511, the second surface 512, and the third surface 513. When the second display area 230b is rolled into the first housing part 210, the first housing part 210 may protect the second display area 230b. As the electronic device 101 changes from the first state to the second state, the second display area 230b may be slid out of the electronic device 101 after passing through an edge (e.g., a third edge 523) of the first surface 511. In the second state in which the second display area 230b is slid out as much as possible, the display area of the display 230 may have a maximum size.

According to an example, the first housing part 210 may include a plurality of conductive portions. The plurality of conductive portions may include a conductive material (e.g., metal). At least some of the plurality of conductive portions may operate as an antenna radiator capable of transmitting and/or receiving a wireless signal on a designated frequency band by being electrically connected to a wireless communication circuit 192.

For example, the first housing part 210 may include the first conductive portion 531 and the second conductive portion 532. The first conductive portion 531 and the second conductive portion 532 may be separated by at least one non-conductive portion (e.g., a first non-conductive portion 541 shown in FIGS. 5A and 5B). As described herein, the first housing part 210 and the second housing part 220 move toward one another as the display 230 is rolled in a first direction (e.g., contracted) into the first state and move away from one another as the display is rolled in a second direction (e.g., expanded) into the second state. Accordingly, the at least one non-conductive portion 541 moves with respect to the first housing part 210 when displacing the first housing part 210 and the second housing part 220. In addition, as the first housing part 210 and the second housing part 220 are displaced away from one another, at least a portion of the display 230 (e.g., the first display area 230a and the second display area 230b) is moved away (e.g., rolled away) from the at least one non-conductive portion 541.

The first conductive portion 531 may form the first surface 511 and a part of the second surface 512. For another example, the first conductive portion 531 may be separated from the first surface 511 and may form a part of the second surface 512. The second conductive portion 532 may form another part of the second surface 512.

The third surface 513, for example, may include a first edge 521 and a second edge 522. The first edge 521 may be an edge of the third surface 513 in contact with the first surface 511. For example, the first edge 521 may be an edge facing in the +z direction in the third surface 513. The second edge 522 may be an edge of the second surface 512 in contact with the second surface 512. For example, the second edge 522 may be an edge facing in the -z direction in the third surface 513. The second edge 522 may be parallel to the first edge 521. For example, the first surface 511 may include the third edge 523. The third edge 523 may be an edge of the first surface 511 facing and parallel to the first edge 521. For example, the first edge 521 may be an edge facing the +z direction in the first surface 511. For example, the first edge 521 may face a boundary between the first display area 230a and the second display area 230b.

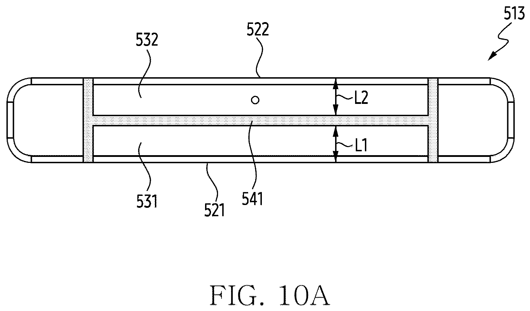

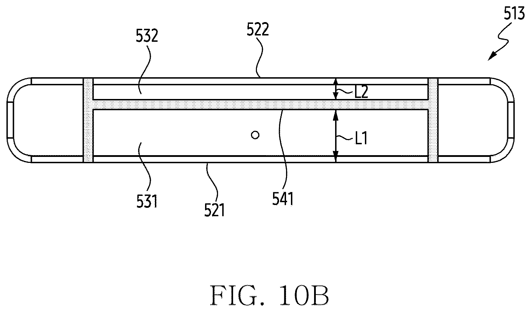

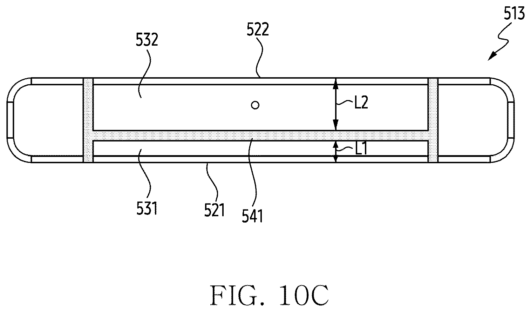

For example, the first non-conductive portion 541 may be disposed in the third surface 513. The first non-conductive portion 541 may be disposed between the first edge 521 and the second edge 522. For example, the first non-conductive portion 541 may pass through a center between the first edge 521 and the second edge 522 and may be disposed parallel to the first edge 521 and the second edge 522. In the above example, a distance between the first non-conductive portion 541 and the first edge 521 and a distance between the first non-conductive portion 541 and the second edge 522 may be substantially the same. However, it is not limited thereto. For example, the first non-conductive portion 541 may be disposed to have a slope with respect to the first edge 521 and/or the second edge 522. For example, the first non-conductive portion 541 may be disposed closer to the second edge 522 than the first edge 521, or the first non-conductive portion 541 may be disposed closer to the first edge 521 than the second edge 522. Structures according to various dispositions of the first non-conductive portion 541 will be exemplified through FIGS. 10A, 10B, and 10C.

For example, the first conductive portion 531 and the second conductive portion 532 may be separated by the first non-conductive portion 541. For example, the first conductive portion 531 may extend from the third edge 523 to the first non-conductive portion 541 disposed in the third surface 513 after passing through the first edge 521. For example, the first conductive portion 531 may form a first surface 511 and the third surface 513. For example, the second conductive portion 532 may extend from the first non-conductive portion 541 to the second edge 522. When viewing the third surface 513 from the front, the first conductive portion 531 may be located on one side (e.g., the +z direction) with respect to the first non-conductive portion 541, and the second conductive portion 532 may be located on the other side (e.g., the -z direction) opposite to the first non-conductive portion 541.

For example, the first housing part 210 may further include a second non-conductive portion 542 and a third non-conductive portion 543. For example, a length of the first non-conductive portion 541 may be shorter than a length of the first edge 521 and a length of the second edge 522. The second non-conductive portion 542 may be in contact with one end 541a (e.g., one end in a -x direction) of the first non-conductive portion 541, and may extend from the third edge 523 to the second edge 522. The third non-conductive portion 543 may be in contact with another end 541b (e.g., an end in a +x direction) of the first non-conductive portion 541 opposite to the one end 541a, and may extend from the third edge 523 to the second edge 522. The second conductive portion 532 may be separated from the first conductive portion 531 by being surrounded by the second edge 522, the first non-conductive portion 541, the second non-conductive portion 542, and the third non-conductive portion 543.

For example, the first housing part 210 may further include a third conductive portion 533 and a fourth conductive portion 534 separated from the first conductive portion 531 and the second conductive portion 532 by the second non-conductive portion 542 and the third non-conductive portion 543. The third conductive portion 533 may be disposed on one side (e.g., the -x direction) of the first conductive portion 531 and the second conductive portion 532, and may be in contact with the second non-conductive portion 542. The fourth conductive portion 534 may be disposed on another other side (e.g., the +x direction) of the first conductive portion 531 and the second conductive portion 532, and may be in contact with the third non-conductive portion 543.

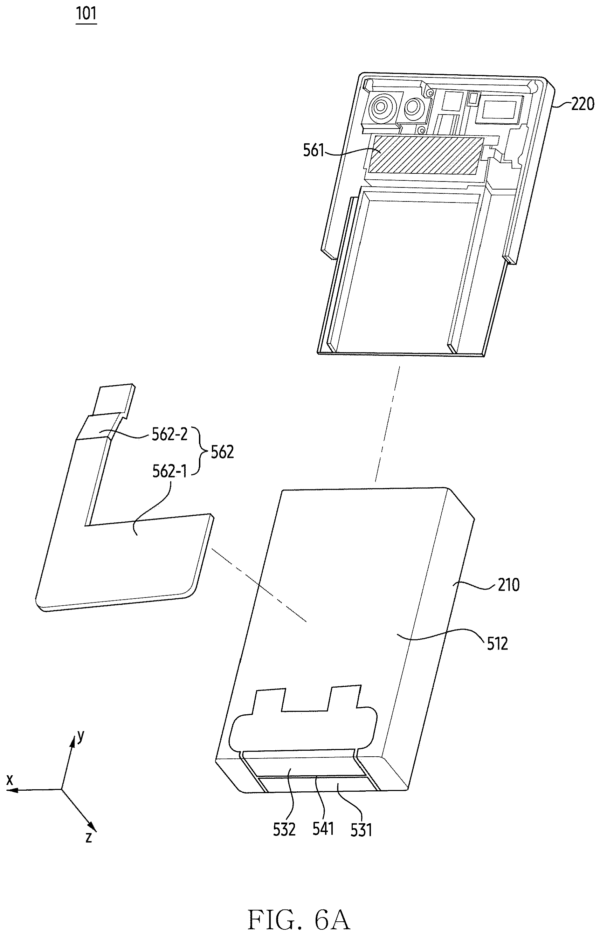

The exemplary electronic device 101 may communicate with an external electronic device by using the second conductive portion 532 as the antenna radiator. For example, the wireless communication circuit 192 may be electrically connected to the second conductive portion 532. For example, the wireless communication circuit 192 disposed on a first substrate (e.g., a first substrate 561 of FIG. 6A) to be described later may be electrically connected to the second conductive portion 532 through a second substrate (e.g., the second substrate 562 of FIG. 5B), a third substrate (e.g., a third substrate 563 of FIG. 6A), and/or a fourth substrate (e.g., a fourth substrate 564 of FIG. 6A). The wireless communication circuit 192 may transmit a signal on the designated frequency band to the external electronic device by using the electrically connected second conductive portion 532 as the antenna radiator. For example, the wireless communication circuit 192 may receive the signal from the external electronic device by using the second conductive portion 532 as the antenna radiator. The second conductive portion 532 may operate as the antenna radiator for transmitting and/or receiving the wireless signal. For example, the wireless communication circuit 192 may be electrically separated from the first conductive portion 531. However, it is not limited thereto.

In the above-described electronic device 101, it has been described that the segmental structure formed by the conductive portions 531, 532, 533, and 534 and the non-conductive portions 541, 542, and 543 is formed on the first surface 511 and the third surface 513, but is not limited thereto. For example, the conductive portions 531, 532, 533, and 534 may not be formed in the first surface 511, but may be formed only in the third surface 513 facing the -y direction. For example, referring to FIG. 5C, the first conductive portion 531 and the second conductive portion 532 may be formed in the third surface 513. The second non-conductive portion 542 and the third non-conductive portion 543 may also be formed in the third surface 513. The segmental structure formed by the conductive portions 531, 532, 533, and 534 and the non-conductive portions 541, 542, and 543 may be formed in the third surface 513 and may not extend to the first surface 511.

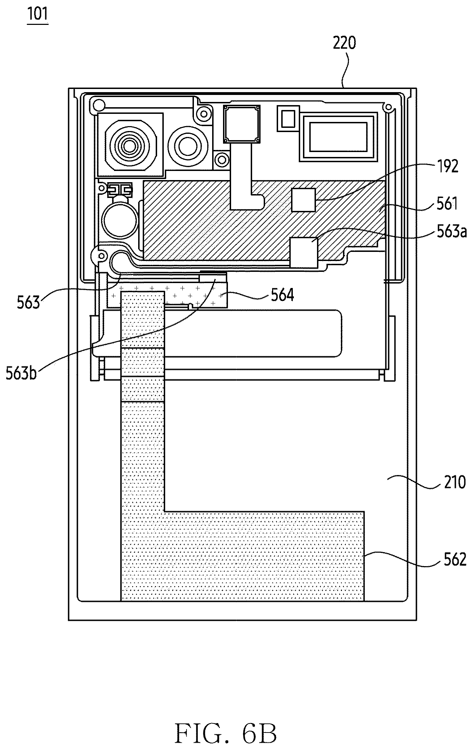

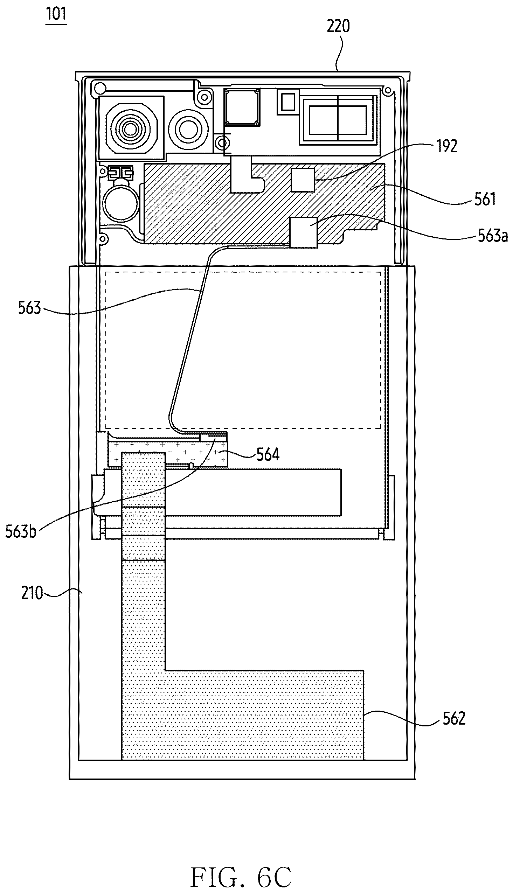

FIG. 6A is an exploded perspective view of some components of an exemplary electronic device. FIG. 6B illustrates an exemplary electronic device in a first state. FIG. 6C illustrates an exemplary electronic device in a second state.

Referring to FIG. 6A, an exemplary electronic device 101 may include a first substrate 561 and a second substrate 562. For example, the first substrate 561 and the second substrate 562 may be printed circuit boards. The first substrate 561 and the second substrate 562 may be electrically connected through a third substrate (e.g., a substrate 563 of FIG. 6B). For example, the first substrate 561, the second substrate 562, and/or the third substrate 563 may include a plurality of conductive layers and a plurality of non-conductive layers alternately laminated with the plurality of conductive layers. The first substrate 561, the second substrate 562, and/or the third substrate 563 may provide electrical connection between various electronic components by using wires and conductive vias formed on the conductive layer. For example, a wireless communication circuit 192 may be disposed on the first substrate 561, and a contact portion for electrical connection with a second conductive portion 532 may be formed on the second substrate 562.

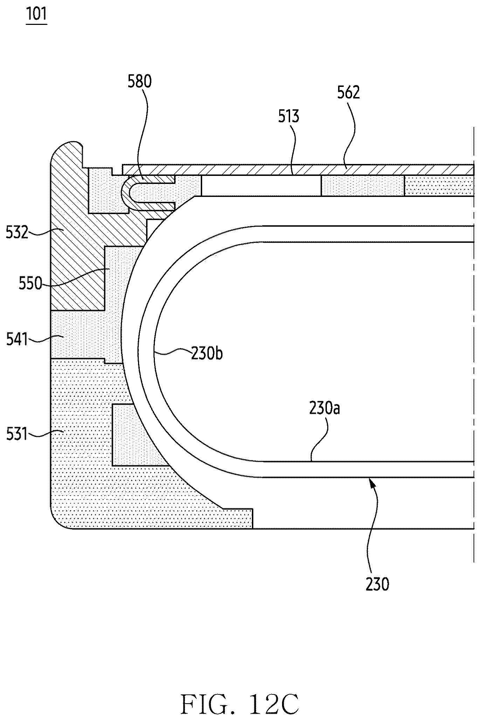

For example, the first substrate 561 may be disposed in a second housing part 220. For example, the second substrate 562 may be disposed in a first housing part 210. For example, the second substrate 562 may be disposed on a second surface 512 of the first housing part 210. Since the first housing part 210 and a part of a display (e.g., a display 230 of FIG. 5A) may be inserted into the second housing part 220, the second substrate 562 may be disposed on the second surface 512 rather than inside the first housing part 210. The second substrate 562 may be electrically connected to a first conductive portion 531 and/or the second conductive portion 532. For example, the second substrate 562 may be electrically connected to the second conductive portion 532 through a conductive connecting member (e.g., the conductive connecting member 580 of FIG. 12C). For example, the second substrate 562 may be electrically connected to the second conductive portion 532 by being fused to a partial area of the second conductive portion 532. For example, the second substrate 562 may include a first portion 562-1 and a second portion 562-2. For example, the first portion 562-1 may be a portion of the second substrate 562 disposed on the second surface 512 of the second housing part 220. For example, the first portion 562-1 may be rigid and may be in contact with the second conductive portion 532 used as an antenna radiator. For example, the second portion 562-2 may be a portion of the second substrate 562 extending from the first portion 562-1 toward the first substrate 561. For example, the second portion 562-2 may extend in a +y direction and may be electrically connected to a fourth substrate (e.g., a fourth substrate 564 of FIG. 6B). For example, the second portion 562-2 may include a flexible printed circuit board having a flexiblity, but is not limited thereto. Referring to FIGS. 6B and 6C, the third substrate 563 may electrically connect the first substrate 561 and the second substrate 562. For example, the third substrate 563 may include the flexible printed circuit board and a flexible printed circuit board radio frequency cable (FRC).

For example, the third substrate 563 may include a first connector 563a coupled to the first substrate 561 and a second connector 563b coupled to the fourth substrate 564 coupled to the second substrate 562. The fourth substrate 564 may be located between the first substrate 561 and the second substrate 562, and may be connected to the second substrate 562. The third substrate 563 may provide a path for an electrical signal between the first substrate 561 and the second substrate 562 by providing an electrical connection between the first substrate 561 and the second substrate 562. The third substrate 563 may be at least partially deformed by including a flexible property. For example, the third substrate 563 may be at least partially pushed or unfolded based on movement of the second housing part 220. For example, since the first connector 563a is coupled and fixed to the first substrate 561, and the second connector 563b is coupled and fixed to the fourth substrate 564, at least a part of the third substrate 563 between the first connector 563a and the second connector 563b may be deformed. As illustrated in FIG. 6B, in the first state, a part of the third substrate 563 is rolled, so that a space occupied by the third substrate 563 may be reduced. As illustrated in FIG. 6C, the part of the third substrate 563 that was rolled may be unfolded in the second state.

For example, the wireless communication circuit 192 may be disposed on the first substrate 561. The wireless communication circuit 192 may feed to the second conductive portion 532 through the first substrate 561, the second substrate 562, and the third substrate 563. For example, a feeding signal provided from the wireless communication circuit 192 to the second conductive portion 532 may be provided from the first substrate 561 to the second substrate 562 through the third substrate 563. The signal provided to the second substrate 562 may be provided to the second conductive portion 532 electrically connected to the second substrate 562. For example, a signal received from an external electronic device to the second conductive portion 532 may be provided to the wireless communication circuit 192 through the first substrate 561, the second substrate 562, and the third substrate 563. For example, a signal received by the second conductive portion 532 may be provided from the second substrate 562 to the first substrate 561 through the third substrate 563. The received signal provided to the first substrate 561 may be provided to the wireless communication circuit 192 through the conductive pattern of the first substrate 561. Since the housing 201 includes the first housing part 210 and the second housing part 220 that are movably coupled to each other, a radio frequency (RF) signal line may be formed through the second substrate 562 disposed in the first housing part 210, the first substrate 561 disposed in the second housing part 220, and the third substrate 563 electrically connecting the first substrate 561 and the second substrate 562.

Since the first conductive portion 531 forms the first surface 511 for protecting a second display area 230b, it may be located relatively close to the display (e.g., the display 230 of FIG. 5A). For example, a first display area 230a may be located closer to the first conductive portion 531 than the second conductive portion 532. For example, a distance between the second display area 230b and the second conductive portion 532 may be greater than a distance between the second display area 230b and the first conductive portion 531.

Referring again to FIG. 5B, the second conductive portion 532 is separated from the second display area 230b by a distance (d2). The shortest distance d2 from the second display area 230b to the second conductive portion 532 may be greater than the shortest distance d1 from the second display area 230b to the first conductive portion 531. Since the first conductive portion 531 is located close to the second display area 230b, the second display area 230b may easily affect the first conductive portion 531 than the second conductive portion 532. For example, in case that both the first conductive portion 531 and the second conductive portion 532 operate as the antenna radiators, the first display area 230a and the second display area 230b may easily electromagnetically interact with the first conductive portion 531 located relatively closer than with the second conductive portion 532 located relatively far away. In case that a wireless signal is transmitted and/or received through the first conductive portion 531, performance of the first conductive portion 531 may be deteriorated. For example, as the second display area 230b interferes with the wireless signal, the wireless signal is weakened or distorted, and thus communication performance of the electronic device 101 may be deteriorated.

The electronic device 101 according to an example may use the second conductive portion 532 when performing communication with an external electronic device executed by using the wireless communication circuit 192. For example, the second conductive portion 532 may operate as an antenna radiator for transmitting and/or receiving a wireless signal on a designated frequency band. For example, the wireless communication circuit 192 may include a radio frequency integrated circuit (RFIC) and a radio frequency front end (RFFE) for wireless communication. When the electronic device 101 transmits the wireless signal, the RFIC may up-convert a signal of a base band generated by at least one processor (e.g., a processor 120 of FIG. 1) and/or a communication processor) into the signal of the designated frequency band. The up-converted signal may be filtered through the RFFE. The signal may be transmitted to the second conductive portion 532 through the third substrate 563 and the second substrate 562, and transmitted to the external electronic device through the second conductive portion 532. When the electronic device 101 receives the wireless signal, the second conductive portion 532 may receive the wireless signal. The wireless signal received through the second conductive portion 532 may be preprocessed through the RFFE. The RFIC may down-convert the pre-processed wireless signal to the signal of the base band so that it may be processed by at least one processor.

As described above, the wireless communication circuit 192 may perform communication with the external electronic device by using the second conductive portion 532 relatively far from the second display area 230b. The second conductive portion 532 may be electrically separated from the first conductive portion 531 by a first non-conductive portion 541, and the wireless communication circuit 192 may transmit and/or receive the wireless signal by using the second conductive portion 532. As the wireless signal is transmitted and/or received through the second conductive portion 532, deterioration of radiation performance by the second display area 230b may be reduced. Since deterioration of the communication performance by the second display area 230b is reduced, the communication performance of the electronic device 101 may be improved.

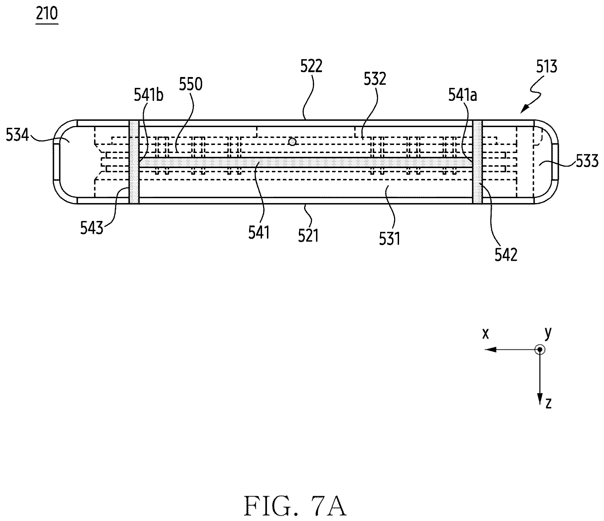

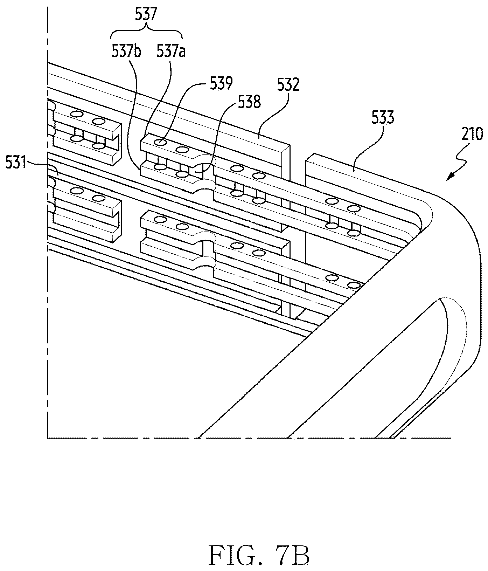

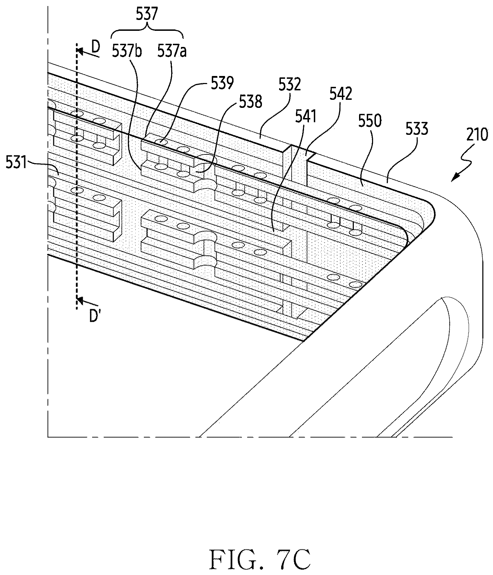

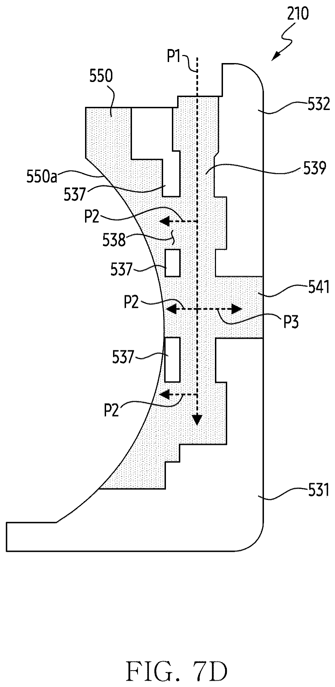

FIG. 7A illustrates a third surface of an exemplary first housing part. FIG. 7B is a perspective view of an exemplary first housing part from which a connecting structure is omitted. FIG. 7C is a perspective view of an exemplary first housing part including a connecting structure. FIG. 7D is a cross-sectional view of an exemplary first housing part cut along D-D' of FIG. 7C.

Referring to FIG. 7A, a third surface 513 of a first housing part 210 may include a plurality of conductive portions separated by a first non-conductive portion 541. For example, the plurality of conductive portions may include a first conductive portion 531, a second conductive portion 532, a third conductive portion 533, and/or a fourth conductive portion 534.

For example, a length of the first non-conductive portion 541 may be shorter than a length of a first edge 521 and a length of a second edge 522. For example, the third conductive portion 533 may be separated from the first conductive portion 531 and the second conductive portion 532 by a second non-conductive portion 542 in contact with one end 541a of the first non-conductive portion 541. For example, the third conductive portion 533 may be located on one side (e.g., a -x direction) of the first conductive portion 531 and the second conductive portion 532. For example, the fourth conductive portion 534 may be separated from the first conductive portion 531 and the second conductive portion 532 by a third non-conductive portion 543 in contact with another end 541b of the first non-conductive portion 541. For example, the fourth conductive portion 534 may be located on another side (e.g., a +x direction) of the first conductive portion 531 and the second conductive portion 532 opposite to the one side. The third conductive portion 533 and the fourth conductive portion 534 may form a part of a first surface (e.g., a first surface 511 of FIG. 5A) and at least a part of side surfaces. For example, the third conductive portion 533 may form at least a part of one side surface of the first housing part 210 facing the -x direction, and the fourth conductive portion 534 may form at least a part of another side surface of the first housing part 210 facing the +x direction.

The plurality of conductive portions (e.g., the first conductive portion 531, the second conductive portion 532, the third conductive portion 533, and/or the fourth conductive portion 534) may be separated from each other by the first non-conductive portion 541, the second non-conductive portion 542, and/or the third non-conductive portion 543. The electronic device 101 may further include a connecting structure 550 for fixing the plurality of conductive portions configuring the first housing part 210 by physically connecting the plurality of conductive portions separated from each other. The connecting structure 550 may extend from the plurality of conductive portions to an inner surface of the first housing part 210 and fix the plurality of conductive portions.

Referring to FIG. 7B, before the connecting structure (e.g., the connecting structure 550 of FIG. 7C) is formed, the plurality of conductive portions may form an empty space by being spaced apart from each other. The empty space may be a space for forming at least one non-conductive portion (e.g., the first non-conductive portion 541, the second non-conductive portion 542, and/or the third non-conductive portion 543) for electrically separating the plurality of conductive portions. As the plurality of conductive portions are spaced apart from each other by the empty space, the plurality of conductive portions may not be fixed.

The plurality of conductive portions may include a structure for forming the connecting structure 550 in order to connect the plurality of conductive portions separated from each other. For example, at least some of the plurality of conductive portions may include a plurality of protrusions 537 protruding inside the first housing part 210. For example, each of the plurality of protrusions 537 may include a recess 538 and at least one through hole 539. The recess 538 may be formed by recessing a partial area of the plurality of protrusions 537 protruding inside the first housing part 210 to the outside of the first housing part 210. The plurality of protrusions 537 may include a first portion 537a and a second portion 537b spaced apart from each other with the recess 538 interposed therebetween. The at least one through hole 539 may penetrate the first portion 537a and/or the second portion 537b.

Referring to FIG. 7C, when the first housing part 210 is manufactured, the empty space between the first conductive portion 531, the second conductive portion 532, the third conductive portion 533, and the fourth conductive portion 534 may be filled with a non-conductive material (e.g., polymer). For example, in order to form the connecting structure 550, the non-conductive material may be injected into the empty space between the plurality of conductive portions and between the protrusions 537. For example, referring to FIG. 7D, when the non-conductive material is injected, the non-conductive material may be injected along a path illustrated in FIG. 7D. For example, the non-conductive material may flow along a first path P1 in a direction from the second conductive portion 532 toward the first conductive portion 531. The first path P1 may be formed to pass through the at least one through hole 539 and the recess 538 formed in the plurality of protrusions 537 to the first conductive portion 531. For example, the non-conductive material and may be injected along inside of the first conductive portion 531 and inside of the second conductive portion 532 by flowing along the first path P1. For example, the non-conductive material flowing along the first path P1 may flow toward inside of the first housing part 210 by flowing along a second path P2 from the first path P1 toward the recess 538. When the non-conductive material flows toward the inside of the first housing part 210, as an area through which the non-conductive material may flow is limited by a mold (not illustrated) for manufacturing the first housing part 210, a surface 550a of the connecting structure 550 surrounding a second display area (e.g., a second display area 230b of FIG. 4B) may be formed. For example, the non-conductive material flowing along the first path P1 may form the first non-conductive portion 541 by flowing along a third path P3 toward between the first conductive portion 531 and the second conductive portion 532. The non-conductive material may form a second non-conductive portion (e.g., the second non-conductive portion 542 of FIG. 7A) by flowing into a space between the first conductive portion 531 and the second conductive portion 532 and a third conductive portion (e.g., the third conductive portion 533 of FIG. 7A). The non-conductive material may form a third non-conductive portion (e.g., the third non-conductive portion 543 of FIG. 7A) by flowing into a space between the first conductive portion 531 and the second conductive portion 532 and a fourth conductive portion (e.g., the fourth conductive portion 534 of FIG. 7A). After the non-conductive material is injected, an annealing process may be performed to remove residual stress in the non-conductive material and improve physical properties (e.g., rigidity). Through the annealing process, the non-conductive material is cured, so that the connecting structure 550 may be formed. The process is exemplary only and is not limited to the above description.

Referring to FIGS. 7C and 7D, the non-conductive material is cured in a state injected between the plurality of conductive portions and between the plurality of protrusions 537 so that the connecting structure 550 may be formed. The connecting structure 550 may connect and fix the plurality of conductive portions separated from each other. For example, the connecting structure 550 may form the first non-conductive portion 541, the second non-conductive portion 542, and/or the third non-conductive portion 543 by filling the empty space between the plurality of conductive portions. The connecting structure 550 may extend from the first non-conductive portion 541, the second non-conductive portion 542, and/or the third non-conductive portion 543 to the inner surface of the first housing part 210. The connecting structure 550 may be coupled to each of the plurality of conductive portions by filling between the plurality of protrusions 537 in the inner surface of the first housing part 210. The connecting structure 550 coupled to each of the plurality of conductive portions may connect and fix the plurality of conductive portions.

For example, in order to reduce electromagnetic interference by a display (e.g., a display 230 of FIG. 5A), the first housing part 210 may be separated into the plurality of conductive portions (e.g., the first conductive portion 531, the second conductive portion 532, the third conductive portion 533, and/or the fourth conductive portion 534) through the first non-conductive portion 541 in the third surface 513. As described above, a wireless communication circuit (e.g., a wireless communication circuit 192 of FIG. 6A) communicates with an external electronic device through a conductive portion (e.g., the second conductive portion 532) located relatively far from the second display area 230b among the plurality of conductive portions separated from each other, thereby reducing deterioration of communication performance. For example, the first non-conductive portion 541 may be parallel to the first edge 521 and the second edge 522, and the first conductive portion 531 and the second conductive portion 532 separated by the first non-conductive portion 541 may be spaced apart from each other with the first non-conductive portion 541 interposed therebetween. The wireless communication circuit 192 may reduce the communication performance deterioration due to the display 230 by communicating with the external electronic device through the second conductive portion 532 located relatively far from the display 230.

The connecting structure 550 is coupled to each of the first conductive portion 531 and the second conductive portion 532, which are separated from each other, and fills between first conductive portion 531 and the second conductive portion 532, thereby fixing the first conductive portion 531 and the second conductive portion 532. The connecting structure 550 may be integral with the first non-conductive portion 541, the second non-conductive portion 542, and/or the third non-conductive portion 543, but is not limited thereto. For example, when the non-conductive material for forming the connecting structure 550 is injection-molded, the non-conductive portion may form the first non-conductive portion 541, the second non-conductive portion 542, and/or the third non-conductive portion 543 by filling the empty space between the plurality of conductive portions. However, it is not limited thereto. The first non-conductive portion 541, the second non-conductive portion 542, and/or the third non-conductive portion 543 may be formed independently of the connecting structure 550 and may include a material different from the connecting structure 550. The first housing part 210 may include a structure for forming the connecting structure 550. For example, the connecting structure 550 coupled to each of the plurality of conductive portions may be formed through the plurality of protrusions 537, the at least one through hole 539 formed in the plurality of protrusions 537, and the recess 538.

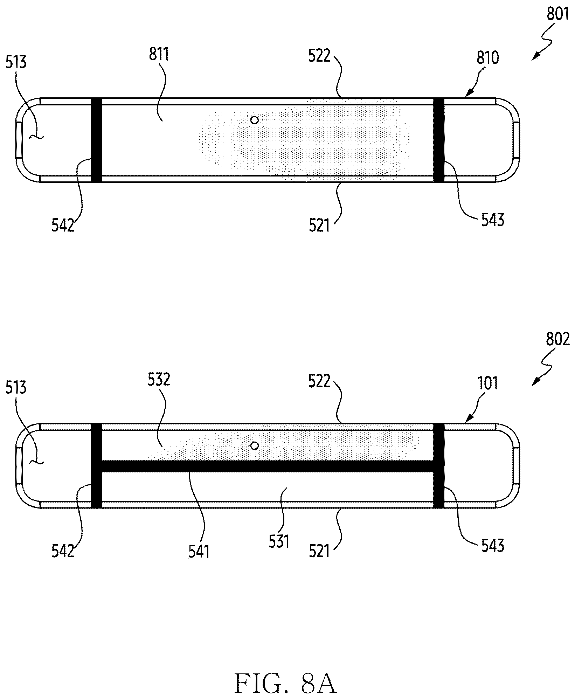

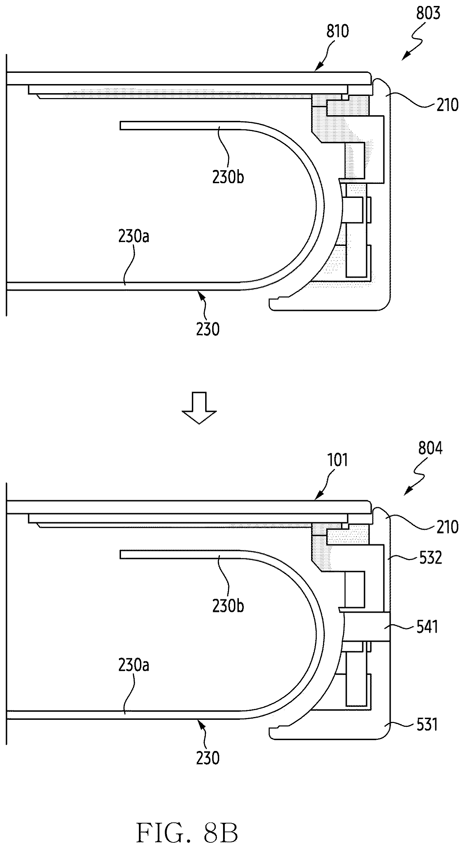

FIG. 8A illustrates an E-(electric) field formed in a third surface while an exemplary electronic device communicates with an external electronic device. FIG. 8B illustrates an E-(electric) field formed on a first conductive portion and a second conductive portion while an exemplary electronic device communicates with an external electronic device.

801 of FIG. 8A and 803 of FIG. 8B illustrate an electronic device 810 according to the comparative example that does not include a first non-conductive portion 541. 802 and 804 of FIG. 8A indicate an exemplary electronic device (e.g., an electronic device 101 of FIG. 5A) including the first non-conductive portion 541. The electronic device 810 according to the comparative example may not include the first non-conductive portion 541 separating a third surface 513, but may include only a second non-conductive portion 542 and a third non-conductive portion 543. The electronic device 810 according to the comparative example may communicate with the external electronic device through a conductive portion 811 between the second non-conductive portion 542 and the third non-conductive portion 543. The exemplary electronic device 101 may communicate with the external electronic device through a second edge 522, the first non-conductive portion 541, the second non-conductive portion 542, and a second conductive portion 532 surrounded by the third non-conductive portion 543.

Comparing 801 and 802 of FIG. 8A, distribution of an E-(electric) field may vary depending on the first non-conductive portion 541. Referring to 801, since the third surface 513 is not separated by the first non-conductive portion 541 and a wireless signal is transmitted and/or received through the conductive portion 811, the E-(electric) field may be formed between a first edge 521 and the second edge 522. Referring to 802, since the third surface 513 is separated into a first conductive portion 531 and the second conductive portion 532 by the first non-conductive portion 541, and the wireless signal is transmitted and/or received through the second conductive portion 532, the E-(electric) field may be formed between the first non-conductive portion 541 and the second edge 522. Since the first edge 521 is an edge close to a second display area (e.g., a second display area 230b of FIG. 5B) of a display (e.g., a display 230 of FIG. 5B), in case that the E-(electric) field is formed in a portion adjacent to the first edge 521, electromagnetic interaction between the second display area 230b and the E-(electric) field may occur. The electromagnetic interaction may cause deterioration of communication performance.

Comparing 803 and 804 of FIG. 8B, in case that the first conductive portion 531 and the second conductive portion 532 are separated by the first non-conductive portion 541, the E-(electric) field formed in the first conductive portion 531 may be reduced. Referring to 803, the E-(electric) field may be formed in a portion of the first housing part 210 adjacent to the second display area 230b. As the E-(electric) field is formed in the portion of the first housing part 210 adjacent to the second display area 230b, the second display area 230b may cause the deterioration of the communication performance. Referring to 804, the E-(electric) field formed in the first conductive portion 531 may be reduced. Since the first conductive portion 531 is separated from the second conductive portion 532 by the first non-conductive portion 541 and the wireless signal is transmitted and/or received through the second conductive portion 532, the E-(electric) field formed in the first conductive portion 531 may be reduced. As the E-(electric) field is reduced in the first conductive portion 531 relatively close to the second display area 230b, and the E-(electric) field is concentrated in the second conductive portion 532 relatively far from the second display area 230b, the deterioration of the communication performance of the exemplary electronic device 101 may be reduced. According to an embodiment, the communication performance of the exemplary electronic device 101 may be improved compared to the communication performance of the electronic device 810 according to the comparative example.

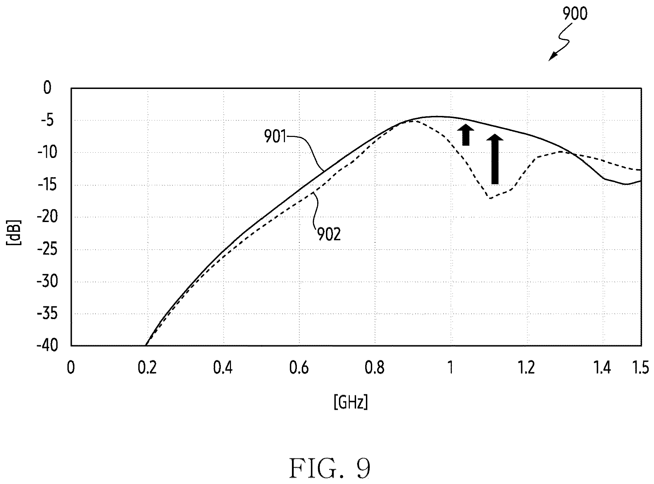

FIG. 9 is a graph showing a radiation characteristic of an electronic device.

An x-axis of a graph 900 is frequency (unit: giga hertz (GHz)), and a y-axis of the graph 900 is a gain of an antenna (unit: decibel (dB)).

A first graph 901 of FIG. 9 shows the radiation characteristic of an exemplary electronic device 101 including a first conductive portion (e.g., a first conductive portion 531 of FIG. 5A) and a second conductive portion (e.g., a second conductive portion 532 of FIG. 5A) separated by a first non-conductive portion (e.g., a first non-conductive portion 541 of FIG. 5A) in a third surface (e.g., a third surface 513 of FIG. 5A). The exemplary electronic device 101 may communicate with an external electronic device through the second conductive portion 532 located relatively far from a second display area 230b. A second graph 902 of FIG. 9 shows radiation characteristic of the electronic device (e.g., an electronic device 810 of FIG. 8A) according to the comparative example that does not include the first conductive portion 531 in the third surface 513.

Referring to FIG. 9, communication performance of the electronic device 810 according to the comparative example may be deteriorated than communication performance of the exemplary electronic device 101. For example, comparing the first graph 901 and the second graph 902, a gain of the first graph 901 may be higher than a gain of the second graph 902. For example, in a frequency band of about 0.8 GHz to about 1.3 GHz, the gain of the first graph 901 may be up to about 10 dB higher than the gain of the second graph 902. Due to deterioration of radiation performance by the second display area 230b, the gain of the second graph 902 may be lower than the gain of the first graph 901. Since the first graph 901 has a higher gain overall than the second graph 902 in a frequency band of about 1.3 GHz or less, a bandwidth of the first graph 901 may be wider than a bandwidth of the second graph 902. For example, in a frequency band of about 0.9GHz or higher, the gain of the second graph 902 decreases rapidly, so the bandwidth of the second graph 902 may be limited to about 0.9GHz or less. Since the first graph 901 has a relatively high gain in the frequency band of about 1.3 GHz or less, the bandwidth of the first graph 901 may be expanded to about 1.3 GHz. As deterioration of the communication performance by the second display area 230b decreases, the communication performance of the exemplary electronic device 101 may be superior to the communication performance of the electronic device 810 according to the comparative example.

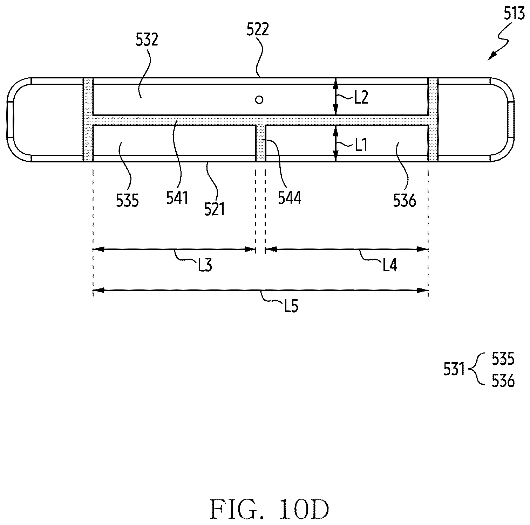

FIGS. 10A, 10B, 10C, and 10D illustrate an exemplary third surface.

Referring to FIG. 10A, a first non-conductive portion 541 may be located between a first edge 521 and a second edge 522. For example, as illustrated in FIG. 10A, the first non-conductive portion 541 may pass through a center between the first edge 521 and the second edge 522 and may be parallel to the first edge 521 and the second edge 522. For example, a length L1 between the first non-conductive portion 541 and the first edge 521 and a length L2 between the first non-conductive portion 541 and the second edge 522 may be substantially the same (L1=L2). In a third surface 513, an area of a second conductive portion 532 may be substantially the same as an area of a first conductive portion 531. In case of a structure illustrated in FIG. 10A, since the first non-conductive portion 541 passes through a center of the third surface 513, a design of a first housing part 210 may be simplified and an aesthetic characteristic thereof may be excellent.

Referring to FIG. 10B, the first non-conductive portion 541 may be located closer to the second edge 522 among the first edge 521 and the second edge 522. For example, as illustrated in FIG. 10B, the length L1 between the first non-conductive portion 541 and the first edge 521 may be farther than the length L2 between the first non-conductive portion 541 and the second edge 522 (L1>L2). For example, the first non-conductive portion 541 may be closer to a second surface 512 than a first surface 511. For example, the first conductive portion 531 may be larger than the area of the second conductive portion 532. In case of a structure illustrated in FIG. 10B, since the first non-conductive portion 541 is located far from the first edge 521 facing a direction of a second display area (e.g., a second display area 530b of FIG. 5B) of a display 230, a length between the second conductive portion 532 and a second display area 230b may be increased. As the second conductive portion 532 operating as an antenna radiator moves away from the second display area 230b, deterioration of communication performance due to the second display area 230b may be reduced. For example, when the user uses an electronic device 101, the display 230 and a user's body may be in contact with each other. As the second conductive portion 532 used as the antenna radiator moves away from the display 230, a distance between the second conductive portion 532 and the user's body may increase. Due to the increase in the distance, a specific absorption rate (SAR) may decrease.

Referring to FIG. 10C, the first non-conductive portion 541 may be located closer to the first edge 521 among the first edge 521 and the second edge 522. For example, as illustrated in FIG. 10B, the length L1 between the first non-conductive portion 541 and the first edge 521 may be shorter than the length L2 between the first non-conductive portion 541 and the second edge 522 (L1<L2). For example, the first non-conductive portion 541 may be closer to the first surface 511 than the second surface 512. In case of a structure illustrated in FIG. 10C, since the first non-conductive portion 541 is located close to the first edge 521 facing a direction of a display area of the display 230, the area of the second conductive portion 532 may be larger than the area of the first conductive portion 531.

Referring to Equation 1 below, the gain of the antenna may be proportional to an effective area of the antenna.

[Equation 1]

$$G_e = (4\pi/\lambda^2) \, A_e$$

($G_e$: the gain of the antenna, $A_e$: the effective area of the antenna)

Referring to Equation 1 above, since the gain of the antenna is proportional to the effective area of the antenna radiator used to transmit and/or receive a wireless signal, as the area of the second conductive portion 532 operating as the antenna radiator increases, the gain of the antenna including the second conductive portion 532 may increase. Communication performance of the electronic device 101 may be improved through an increase in an area of the conductive portion 532.

The above-described electronic device 101 has been described as communicating with an external electronic device through the second conductive portion 532 located far from the second display area 230b, but is not limited thereto. For example, the electronic device 101 may communicate with the external electronic device through at least a part of the first conductive portion 531.

Referring to FIG. 10D, the first housing part 210 may further include a fourth non-conductive portion 544. For example, the fourth non-conductive portion 544 may be disposed between a second non-conductive portion 542 and a third non-conductive portion 543. For example, the fourth non-conductive portion 544 may separate the first conductive portion 531 into a fifth conductive portion 535 and a sixth conductive portion 536. Although not illustrated in FIG. 10D, the fourth non-conductive portion 544 may extend from a third edge (e.g., a third edge 523 of FIG. 5A) of a first surface (e.g., the first surface 511 of FIG. 5A) to the first non-conductive portion 541 in order to separate the first conductive portion 531. For example, the fifth conductive portion 535 and the sixth conductive portion 536 may be spaced apart from each other with the fourth non-conductive portion 544 interposed therebetween.

The exemplary electronic device 101 may perform communication with the external electronic device by using the fifth conductive portion 535 and/or the sixth conductive portion 536. For example, a wireless communication circuit (e.g., a wireless communication circuit of FIG. 6B) may transmit and/or receive a wireless signal on a designated frequency band by feeding the fifth conductive portion 535 and/or the sixth conductive portion 536.

Since the fifth conductive portion 535 and the sixth conductive portion 536 are formed by separating the first conductive portion 531 by the fourth non-conductive portion 544, a length L3 of the fifth conductive portion 535 and a length L4 of the sixth conductive portion 536 may be shorter than a length L5 of the second conductive portion 532. In case that a part of the first housing part 210 operates as the antenna radiator, a frequency characteristic of the antenna radiator may be determined based on a length of the antenna radiator. For example, when a wavelength corresponding to a resonance frequency of the wireless signal is $\lambda$, the length of the antenna radiator may be about $1/4\lambda$ to about $1/2\lambda$. Since the length L3 of the fifth conductive portion 535 and the length L4 of the sixth conductive portion 536 are shorter than the length L5 of the second conductive portion 532, a frequency of a signal transmitted and/or received through the second conductive portion 532 may be lower than a frequency of a signal transmitted and/or received through the fifth conductive portion 535 and/or the sixth conductive portion 536.

For example, a wireless communication circuit 192 may transmit and/or receive a signal on a first frequency band through the second conductive portion 532. For example, the wireless communication circuit 192 may transmit and/or receive a signal on a second frequency band different from the first frequency band through the fifth conductive portion 535 and/or the sixth conductive portion 536. For example, the first frequency band may be lower than the second frequency band. For example, the first frequency band may be a low band (e.g., about 1 GHz or less), and the second frequency band may be a mid/high band (e.g., about 1 GHz to about 24 GHz), but is not limited thereto.

As illustrated in FIGS. 10A, 10B, 10C, and 10D, a structure of the third surface 513 may vary. The structure of the third surface 513 may be changed according to a communication characteristic required by the electronic device 101. The structure of the third surface 513 is not limited to the illustrated examples, and various exemplary structures may be possible in addition to the illustrated examples.

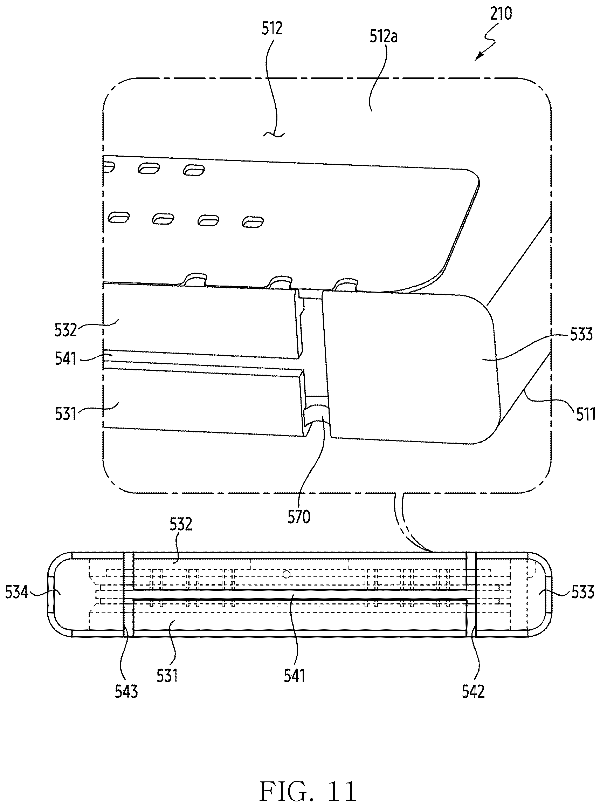

FIG. 11 illustrates a part of an exemplary first housing part.

Referring to FIG. 11, a first conductive portion 531 may be electrically connected to a third conductive portion 533 or a fourth conductive portion 534. For example, a first housing part 210 may further include a bridge 570 electrically connecting the first conductive portion 531 and the third conductive portion 533, or the first conductive portion 531 and the fourth conductive portion 534.

A part of the first housing part 210 may include a ground plane operating as a ground. For example, a support portion 512a forming a second surface 512 of the first housing part 210 may include the ground plane. The third conductive portion 533 and the fourth conductive portion 534 connected to the support portion 512a may be grounded by being connected to the ground plane.

The bridge 570 may be in contact with each of the first conductive portion 531 and the third conductive portion 533, or may be in contact with each of the first conductive portion 531 and the fourth conductive portion 534. In FIG. 11, the bridge 570 is illustrated as being in contact with each of the first conductive portion 531 and the third conductive portion 533, but is not limited thereto. For example, the bridge 570 may electrically connect the first conductive portion 531 and the third conductive portion 533, or may electrically connect the first conductive portion 531 and the fourth conductive portion 534. Since the third conductive portion 533 and the fourth conductive portion 534 are connected to the ground plane, the first conductive portion 531 may be grounded through the third conductive portion 533 or the fourth conductive portion 534. For example, the first conductive portion 531 may be electrically connected to the ground through the bridge 570 and the third conductive portion 533, or may be electrically connected to the ground through the bridge 570 and the fourth conductive portion 534. For example, the bridge 570 may be located inside a second non-conductive portion 542 or a third non-conductive portion 543. Since the first conductive portion 531 is located closer to the first surface 511 than the second surface 512, it may be difficult to be connected to the support portion 512a including the ground plane. The first conductive portion 531 may be electrically connected to the ground by being electrically connected to the ground plane through the third conductive portion 533 or the fourth conductive portion 534 located closely.

For example, in case that the second conductive portion 532 operates as an antenna radiator, the first conductive portion 531 is electrically connected to the ground, thereby reducing communication performance deterioration due to the first conductive portion 531. For example, the first conductive portion 531 may be separated from the second conductive portion 532 by a first non-conductive portion 541. Since the first conductive portion 531 is located close to the second conductive portion 532, when a wireless signal is transmitted and/or received through the second conductive portion 532, the first conductive portion 531 may interfere with the wireless signal. As the first conductive portion 531 is electrically connected to the ground, interference with the wireless signal of the first conductive portion 531 may be reduced. Due to the reduction of the interference, the communication performance deterioration of the electronic device 101 may be reduced.

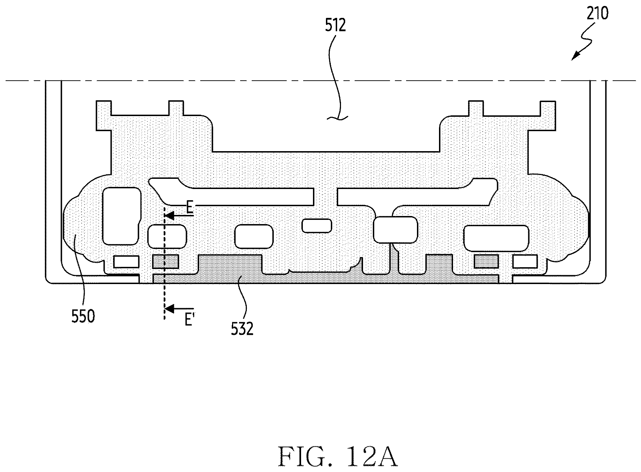

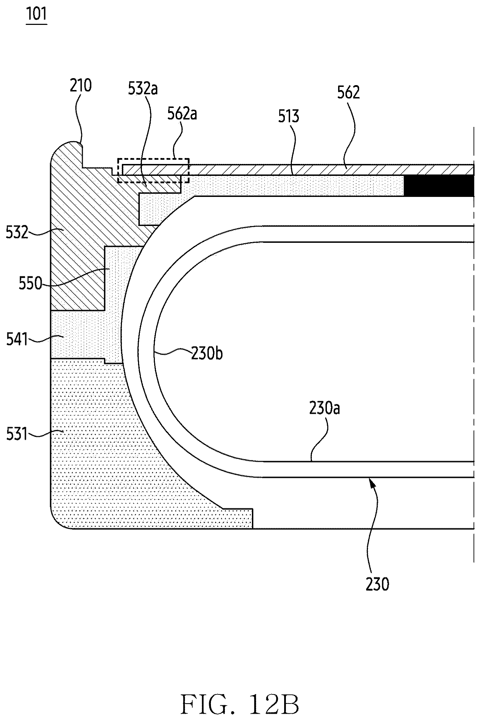

FIG. 12A illustrates a second surface of an exemplary first housing part. FIGS. 12B and 12C are cross-sectional views of an exemplary first housing part cut along E-E' of FIG. 12A.

Referring to FIG. 12A, a second conductive portion 532 operating as an antenna radiator may be electrically connected to a second substrate (e.g., a second substrate 562 of FIG. 12B). For example, the second conductive portion 532 may be electrically connected to a wireless communication circuit (e.g., a wireless communication circuit 192 of FIG. 6B) through the second substrate 562, a third substrate (e.g., a third substrate 563 of FIG. 6B), and a first substrate (e.g., a first substrate 561 of FIG. 6B).

Referring to FIG. 12B, the first conductive portion 531 and the second conductive portion 532 may be fixed by a connecting structure 550. The second substrate 562 may be disposed on a third surface 513 of a first housing part 210. The second substrate 562 may electrically connect the wireless communication circuit 192 disposed on the first substrate 561 and the second conductive portion 532. For example, the second substrate 562 may provide a part of a signal transmission path between the wireless communication circuit 192 and the second conductive portion 532. Since at least a part of the second display area 230b may be rollable into the first housing part 210, the second substrate 562 may be disposed on the third surface 513 of the first housing part 210 rather than inside the first housing part 210. For example, a first plate 212 may protect the second substrate 562 by covering the second substrate 562.

Electrical connection between the second substrate 562 and the second conductive portion 532 may be implemented in various ways. Referring to FIG. 12B, the second substrate 562 may be directly connected to the second conductive portion 532. For example, the second conductive portion 532 may include a first protruding portion 532a protruding inside the first housing part 210. The first protruding portion 532a may overlap a part 562a of the second substrate 562. For example, when viewing the second substrate 562 from above, a part of the second substrate 562 may be located on the second conductive portion 532. The part 562a of the second substrate 562 located on the first protruding portion 532a of the second conductive portion 532 may be fused to the first protruding portion 532a of the second conductive portion 532. For example, the part 562a of the second substrate 562 may be fused to a part (e.g., the first protruding portion 532a) of the second conductive portion 532 through laser bonding or ultrasonic bonding. However, it is not limited thereto.

For example, referring to FIG. 12C, the second substrate 562 may be electrically connected to the second conductive portion 532 through a conductive connecting member 580. For example, the electronic device 101 may further include the conductive connecting member 580. The conductive connecting member 580 may electrically connect the second substrate 562 and the second conductive portion 532 by contacting each of the second substrate 562 and the second conductive portion 532. For example, the conductive connecting member 580 may include a c-clip, a conductive tape, a conductive polyurethane foam, a screw, and a spring pin, but is not limited thereto.

As illustrated in FIGS. 12B and 12C, as the second substrate 562 is electrically connected to the second conductive portion 532, the second conductive portion 532 may operate as an antenna radiator used for communication with an external electronic device.

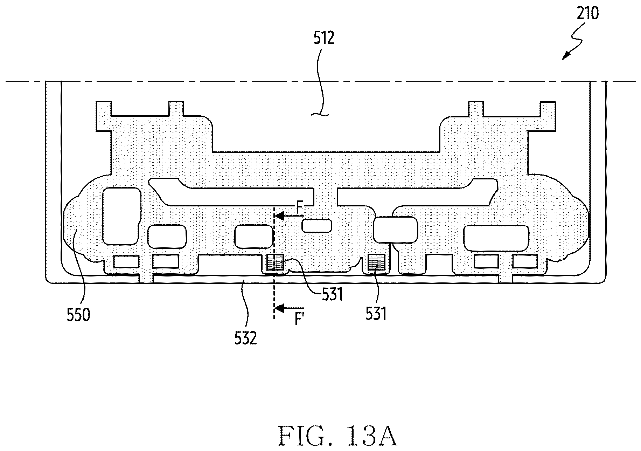

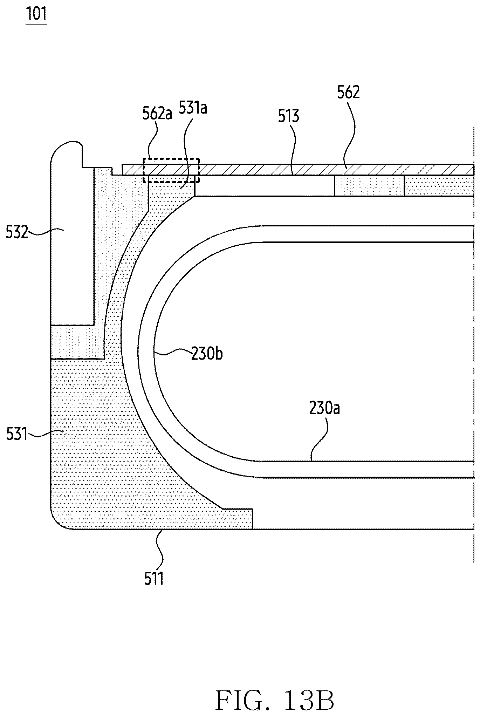

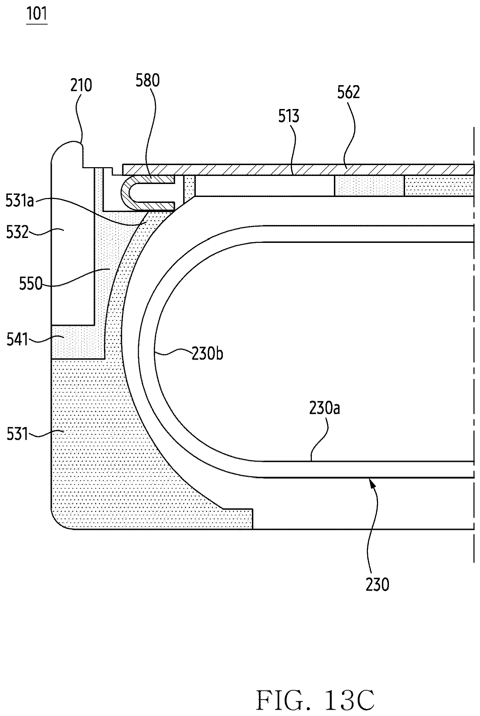

FIG. 13A illustrates a second surface of an exemplary first housing part. FIGS. 13B and 13C are cross-sectional views of an exemplary first housing part cut along F-F' of FIG. 13A.

At least a part (e.g., a fifth conductive portion 535 and/or a sixth conductive portion 536 of FIG. 10D) of a first conductive portion 531 may operate as an antenna radiator. In order for the at least a part of the first conductive portion 531 to operate as the antenna radiator, the first conductive portion 531 may be electrically connected to a second substrate 562. For example, the first conductive portion 531 may be electrically connected to a wireless communication circuit 192 through the second substrate 562, a third substrate 563, and a first substrate 561.

Referring to FIG. 13B, the second substrate 562 may be disposed on a third surface 513 of a first housing part 210. The second substrate 562 may electrically connect the wireless communication circuit 192 disposed on the first substrate 561 and the first conductive portion 531. For example, the second substrate 562 may provide a part of a signal transmission path between the wireless communication circuit 192 and the first conductive portion 531. Since at least a part of a second display area 230b may be rollable into the first housing part 210, the second substrate 562 may be disposed on the third surface 513 of the first housing part 210 rather than inside the first housing part 210.

Electrical connection between the second substrate 562 and the first conductive portion 531 may be implemented in various ways. Referring to FIG. 13B, the second substrate 562 may be directly connected to the first conductive portion 531. For example, the first conductive portion 531 may include a second protruding portion 531a extending inside a connecting structure 550 connecting the first conductive portion 531 and a second conductive portion 532. Since the first conductive portion 531 is located closer to a first surface 511 than the third surface 513, the second protruding portion 531a may extend toward the third surface 513. The second protruding portion 531a may be in contact with the second substrate 562 by extending to the third surface 513. The second protruding portion 531a may overlap a part 562a of the second substrate 562. For example, when viewing the second substrate 562 from above, the part 562a of the second substrate 562 may be located on the second protruding portion 531a of the first conductive portion 531. The part 562a of the second substrate 562 located on the second protruding portion 531a of the first conductive portion 531 may be fused to the second protruding portion 531a. For example, the 562a of the second substrate 562 may be fused to a part (e.g., the second protruding portion 531a) of the first conductive portion 531 through laser bonding or ultrasonic bonding. However, it is not limited thereto.

For example, referring to FIG. 13C, the second substrate 562 may be electrically connected to the first conductive portion 531 through a conductive connecting member 580. For example, an electronic device 101 may further include the conductive connecting member 580. The conductive connecting member 580 may electrically connect the second substrate 562 and the first conductive portion 531 by contacting each of the second substrate 562 and the first conductive portion 531. For example, the conductive connecting member 580 may be in contact with each of the second protruding portion 531a and the second substrate 562.

As illustrated in FIGS. 13B and 13C, as the second substrate 562 is electrically connected to the first conductive portion 531, the first conductive portion 531 may operate as an antenna radiator used for communication with an external electronic device.

An electronic device (e.g., an electronic device 101 of FIG. 5A) is provided. The electronic device may comprise a housing (e.g., a housing 201 of FIG. 5A), a wireless communication circuit (e.g., a wireless communication module 192 of FIG. 1), and a display (e.g., a display 230 of FIG. 5A). The housing may include a first housing part (e.g., a first housing part 210 of FIG. 5A) and a second housing part (e.g., a second housing part 220 of FIG. 5A) movably coupled to the first housing part. The wireless communication circuit may be disposed within the housing. The display may include a first display area (e.g., a first display area 230a of FIG. 5B), and a second display area (e.g., a second display area 230b of FIG. 5B). The second display area may extend from the first display area. The second display area may be at least partially rollable into the first housing part based on the movement of the second housing part. The first housing part may comprise a first surface (e.g., a first surface 511 of FIG. 5A) facing the direction of the first display area, a second surface (e.g., a second surface 512 of FIG. 5A) opposite to the first surface, and a third surface (e.g., a third surface 513 of FIG. 5A) between the first surface and the second surface. The first housing part may comprise a first non-conductive portion (e.g., a first non-conductive portion 541 of FIG. 5A), a first conductive portion (e.g., a first conductive portion 531 of FIG. 5A), and a second conductive portion (e.g., a second conductive portion 532 of FIG. 5A). The first non-conductive portion may be disposed between the first edge (e.g., a first edge 521 of FIG. 5A) of the third surface in contact with the first surface and the second edge (e.g., a second edge 522 of FIG. 5A) of the third surface in contact with the second surface. The first conductive portion may be disposed between the first edge and the first non-conductive portion. The second conductive portion may be disposed between the second edge and the first non-conductive portion. The wireless communication circuit may be configured to communicate with an external electronic device through the second conductive portion. For example, when the second display area is rolled into the first housing part, the first housing part may protect the second display area. The first surface, the second surface, and the third surface may surround the second display area. Since the first conductive portion forming the first surface and a part of the third surface is closer to the display (e.g., the first display area and the second display area) than the second conductive portion, it may be easily affected by the display. In case that the first conductive portion operates as an antenna radiator, communication performance of the electronic device may be deteriorated due to interference by the display. The wireless communication circuit may reduce the deterioration of the communication performance of the electronic device by communicating with the external electronic device through the second conductive portion located relatively far from the display.

For example, the first conductive portion may extend from a third edge (e.g., a third edge 523 of FIG. 5A) of the first surface opposite to the first edge to the first non-conductive portion in the second surface. A distance between the second display area and the second conductive portion may be greater than a distance between the second display area and the first conductive portion. For example, the second conductive portion may be located relatively far from the second display area. When a wireless signal is transmitted and/or received through the second conductive portion, interference applied by the second display area to the wireless signal may be reduced. As the interference is reduced, the communication performance of the electronic device may be improved.

For example, the first conductive portion may extend from a third edge of the first surface opposite to the first edge to the first non-conductive portion in the second surface. The first housing part may further comprise a second non-conductive portion (e.g., a second non-conductive portion 542 of FIG. 5A) and a third non-conductive portion (e.g., a third non-conductive portion 543 of FIG. 5A). The second non-conductive portion may be in contact with one end (e.g., one end 541a of FIG. 5A) of the first non-conductive portion. The second non-conductive portion may extend from the third edge to the second edge. The third non-conductive portion may be in contact with the other end (e.g., the other end 541b of FIG. 5A) of the first non-conductive portion opposite to the one end. The third non-conductive portion may extend from the third edge to the second edge.

For example, the second conductive portion may be surrounded by the second edge, the first non-conductive portion, the second non-conductive portion, and the third non-conductive portion. For example, the third surface may be separated by the first non-conductive portion, the second non-conductive portion, and the third non-conductive portion. The second conductive portion operating as the antenna radiator may be electrically separated from other conductive portions forming the third surface by being surrounded by the second edge, the first non-conductive portion, the second non-conductive portion, and the third non-conductive portion.

For example, the first housing part may further comprise a third conductive portion (e.g., a third conductive portion 533 of FIG. 11), a fourth conductive portion (e.g., a fourth conductive portion 534 of FIG. 11), and a bridge (e.g., a bridge 570 of FIG. 11). The third conductive portion may be disposed on one side of the first conductive portion and the second conductive portion. The third conductive portion may be in contact with the second non-conductive portion. The fourth conductive portion may be disposed on the other side of the first conductive portion and the second conductive portion opposite to the one side. The fourth conductive portion may be in contact with the third non-conductive portion. The bridge may be in contact with the first conductive portion and the third conductive portion to electrically connect the first conductive portion and the third conductive portion. For example, the third conductive portion and/or the fourth conductive portion may be connected to a ground plane of the first housing part operating as a ground. The bridge may ground the first conductive portion by electrically connecting the first conductive portion to the third conductive portion and/or the fourth conductive portion.

For example, the third conductive portion may be electrically connected to the ground of the electronic device. The first conductive portion may be electrically connected to the ground through the bridge and the third conductive portion. For example, in case that the second conductive portion operates as the antenna radiator, the first conductive portion is electrically connected to the ground, thereby reducing communication performance deterioration due to the first conductive portion. Since the first conductive portion is located close to the second conductive portion, when the wireless signal is transmitted and/or received through the second conductive portion, the first conductive portion may interfere with the wireless signal. As the first conductive portion is electrically connected to the ground, interference with the wireless signal of the first conductive portion may be reduced. By reducing the interference, communication performance deterioration of the electronic device may be reduced.

For example, the first housing part may further comprise a fourth non-conductive portion (e.g., a fourth non-conductive portion 544 of FIG. 10D). The fourth non-conductive portion may extend from the third edge of the first surface opposite the first edge to the first non-conductive portion in the third surface. The fourth non-conductive portion may be disposed between the second non-conductive portion and the third non-conductive portion. The first conductive portion may include a fifth conductive portion (e.g., a fifth conductive portion 535 of FIG. 10D) and a sixth conductive portion (e.g., a sixth conductive portion 536 of FIG. 10D) separated by the fourth non-conductive portion. The wireless communication circuit may be configured to transmit and/or receive a signal on a first frequency band through the second conductive portion. The wireless communication circuit may be configured to transmit or receive a signal on a second frequency band different from the first frequency band through the fifth conductive portion or the sixth conductive portion. For example, the electronic device may communicate with the external electronic device through at least a part of the first conductive portion and the second conductive portion. For example, the first conductive portion may be separated into the fifth conductive portion and the sixth conductive portion by the fourth non-conductive portion. Since a length (e.g., a length L3 of FIG. 10D) of the fifth conductive portion and a length (e.g., a length L4 of FIG. 10D) of the sixth conductive portion are shorter than a length (e.g., a length L5 of FIG. 10D) of the second conductive portion, a first frequency band of a wireless signal transmitted and/or received through the second conductive portion may be different from a second frequency band of a wireless signal transmitted and/or received through the fifth conductive portion and/or the sixth conductive portion. For example, the first frequency band may be a low band (e.g., about 1 GHz or less), and the second frequency band may be a mid/high band (e.g., about 1 GHz to about 24 GHz). By the structure, the electronic device may include various antennas.

For example, the electronic device may further comprise a connecting structure (e.g., a connecting structure 550 of FIG. 7C). The connecting structure may be connected to the inner surface of the first conductive portion and the inner surface of the second conductive portion by extending from the first non-conductive portion to the inner surface of the first housing part. The connecting structure may fix the first conductive portion and the second conductive portion. The electronic device may further include a connecting structure for fixing a plurality of conductive portions configuring the first housing by physically connecting the plurality of conductive portions separated from each other. The connecting structure may fix the plurality of conductive portions by extending from the plurality of conductive portions to the inner surface of the first housing part. The connecting structure may be integrally formed with non-conductive portions of the first housing part.

For example, the electronic device may further comprise a first substrate (e.g., a first substrate 561 of FIG. 6A) and a second substrate (e.g., a second substrate 562 of FIG. 6A). The first substrate may be disposed within the second housing part. The second substrate may be electrically connected to the first substrate. The second substrate may be disposed within the first housing part. The wireless communication circuit may be disposed on the first substrate. The second substrate may be disposed on the third surface. The second substrate may be electrically connected to the second conductive portion. For example, since the housing includes the first housing part and the second housing part to which it is movably coupled, an electrical connection between electronic components in the first housing part and electronic components in the second housing part may be required. The first substrate may be electrically connected to the electronic components in the second housing, and the second substrate may be electrically connected to the electronic components in the first housing. For example, the second substrate may be disposed on a second surface of the first housing part. For example, the wireless communication circuit may be disposed on the first substrate and may be electrically connected to the second conductive portion through the first substrate and the second substrate. A feeding signal provided from the wireless communication circuit to the second conductive portion may be provided through the first substrate and the second substrate.

For example, the electronic device may further comprise a conductive connecting member (e.g., a conductive connecting member 580 of FIG. 12C) electrically connecting the second substrate and the second conductive portion by being in contact with each of the second substrate and the second conductive portion. For example, the conductive connecting member may electrically connect the second conductive portion to the second substrate. For example, the conductive connecting member may include a c-clip, a conductive tape, a conductive polyurethane foam, a screw, and a spring pin, but is not limited thereto.

For example, the second substrate may be fused to a part (e.g., a part 562a of FIG. 12B) of the second conductive portion. For example, the second substrate may be electrically connected to the second conductive portion by being in directly contact with the second conductive portion.

For example, a feeding signal provided from the wireless communication circuit to the second conductive portion may be provided from the first substrate to the second substrate through a third substrate (e.g., a third substrate 563 of FIG. 6B) electrically connecting the first substrate and the second substrate and may be provided from the second substrate to the second conductive portion.

For example, the second housing part may be movably coupled to the first housing part in a first direction (e.g., a first direction 261 of FIG. 5A) and in a second direction (e.g., a second direction 262 of FIG. 5A) opposite to the first direction. The second display area may be rolled into the first housing part in a first state in which the second housing part is movable only in the first direction of the first direction and the second direction by moving in the second direction. The second display area may be at least partially exposed to the outside of the first housing part in a second state in which the second housing part is movable only in the second direction of the first direction and the second direction by moving in the first direction.

For example, the second display area may be covered by the first surface, the second surface, and the third surface in the first state. For example, when the second display area is in a state slid in the first housing part, the second display area may be protected by being covered by the first surface, the second surface, and the third surface.

For example, the first display area may be located closer to the first conductive portion than to the second conductive portion. For example, the first display area and the second display area of the display may be located closer to the first conductive portion than the second conductive portion. The electronic device may perform communication with an external electronic device by using the second conductive portion to reduce communication performance deterioration due to the display.

An electronic device (e.g., the electronic device 101 of FIG. 5A) is provided. The electronic device may comprise a housing (e.g., the housing 201 of FIG. 5A), a wireless communication circuit (e.g., the wireless communication module 192 of FIG. 1), and a display (e.g., the display 230 of FIG. 5A). The housing may include a first housing part (e.g., the first housing part 210 of FIG. 5A) and a second housing part (e.g., the second housing part 220 of FIG. 5A) movably coupled to the first housing part in a first direction (e.g., the first direction 261 of FIG. 5A) and in a second direction (e.g., the second direction 262 of FIG. 5A) opposite to the first direction. The wireless communication circuit may be disposed within the housing. The display may be at least partially rollable into the first housing part based on the movement of the second housing part. The first housing part may comprise a first surface (e.g., the first surface 511 of FIG. 5A) facing the direction of the display exposed to the outside of the first housing, a second surface (e.g., the second surface 512 of FIG. 5A) opposite to the first surface, and a third surface (e.g., the third surface 513 of FIG. 5A) between the first surface and the second surface. At least a part (e.g., the second display area 230b of FIG. 5B) of the display may be expanded as the second housing part moves in the first direction, may be contracted as the second housing part moves in the second direction. At least the part of the display may be covered by the first surface, the second surface, and the third surface. The first housing part may comprise a first non-conductive portion (e.g., the first non-conductive portion 541 of FIG. 5A), a first conductive portion (e.g., the first conductive portion 531 of FIG. 5A), and a second conductive portion (e.g., the second conductive portion 532 of FIG. 5A). The first non-conductive portion may be disposed between the first edge (e.g., the first edge 521 of FIG. 5A) of the third surface in contact with the first surface and the second edge (e.g., the second edge 522 of FIG. 5A) of the third surface in contact with the second surface. The first non-conductive portion may be parallel to the first edge and the second edge. The first conductive portion may be disposed between the first edge and the first non-conductive portion. The second conductive portion may be disposed between the second edge and the first non-conductive portion. The wireless communication circuit may be configured to communicate with an external electronic device through the second conductive portion.

For example, the first conductive portion may extend from a third edge of the first surface opposite to the first edge to the first non-conductive portion in the second surface. The first housing part may further comprise a second non-conductive portion (e.g., the second non-conductive portion 542 of FIG. 5A) and a third non-conductive portion (e.g., the third non-conductive portion 543 of FIG. 5A). The second non-conductive portion may be in contact with one end (e.g., one end 541a of FIG. 5A) of the first non-conductive portion. The second non-conductive portion may extend from the third edge to the second edge. The third non-conductive portion may be in contact with the other end (e.g., the other end 541b of FIG. 5A) of the first non-conductive portion opposite to the one end. The third non-conductive portion may extend from the third edge to the second edge.

For example, the first housing part may further comprise a fourth non-conductive portion (e.g., the fourth non-conductive portion 544 of FIG. 10D). The fourth non-conductive portion may extend from the third edge of the first surface opposite the first edge to the first non-conductive portion in the third surface. The fourth non-conductive portion may be disposed between the second non-conductive portion and the third non-conductive portion. The first conductive portion may include a fifth conductive portion (e.g., the fifth conductive portion 535 of FIG. 10D) and a sixth conductive portion (e.g., the sixth conductive portion 536 of FIG. 10D) separated by the fourth non-conductive portion. The wireless communication circuit may be configured to transmit and/or receive a signal on a first frequency band through the second conductive portion. The wireless communication circuit may be configured to transmit and/or receive a signal on a second frequency band different from the first frequency band through the fifth conductive portion and/or the sixth conductive portion.

For example, the electronic device may further comprise a connecting structure (e.g., the connecting structure 550 of FIG. 7C). The connecting structure may be connected to the inner surface of the first conductive portion and the inner surface of the second conductive portion by extending from the first non-conductive portion to the inner surface of the first housing part. The connecting structure may fix the first conductive portion and the second conductive portion.

For example, the electronic device may further comprise a first substrate (e.g., the first substrate 561 of FIG. 6A) and a second substrate (e.g., the second substrate 562 of FIG. 6A). The first substrate may be disposed within the second housing part. The second substrate may be electrically connected to the first substrate. The second substrate may be disposed within the first housing part. The wireless communication circuit may be disposed on the first substrate. The second substrate may be disposed on the third surface. The second substrate may be electrically connected to the second conductive portion. For example, an electronic device comprises: a housing extending along a first axis to define a width, a second axis orthogonal to the first axis to define a length, and a third axis orthogonal to the first and second axes to define a thickness, the housing including a first housing part and a second housing part movably coupled to the first housing part; a wireless communication circuit disposed within the housing; and a display including a first display area, and a second display area extending from the first display area and at least partially rollable into the first housing part based on displacing the first and second housing parts and with respect to one another, the first housing part comprises: a first conductive portion coupled to the first housing part; a second conductive portion coupled to the first housing part, the second conductive portion electrically connected to the wireless communication circuit to facilitate communication with an external electronic device; and at least one non-conductive portion coupled to the first housing part and disposed between the first conductive portion and the second conductive portion, wherein the at least one non-conductive portion is moveable with respect to the second housing part based on displacing the first and second housing parts with respect to one another.

For example, at least a portion of the display is moved away from the at least one non-conductive portion in response to moving the second housing part away from the first housing part.

For example, the first housing part further comprises: a first surface facing a direction of the first display area, a second surface opposite to the first surface; a third surface between the first surface and the second surface, the at least one non-conductive portion is disposed between a first edge of the third surface in contact with the first surface and a second edge of the third surface in contact with the second surface.

For example, the first conductive portion is disposed between the first edge and the at least one non-conductive portion, and the second conductive portion is disposed between the second edge and the at least one non-conductive portion.

For example, the display is configured to move into an expanded state as the second housing part moves along the second axis in a first direction and to move into a contracted state as the second housing part moves along the second axis in a second direction opposite the first direction, and at least a portion of the second housing part is covered by the first surface, the second surface, and the third surface when the display is in the contracted state.

The electronic device according to various embodiments disclosed in the present document may be various types of devices. The electronic device may include, for example, a portable communication device (e.g., a smartphone), a computer device, a portable multimedia device, a portable medical device, a camera, an electronic device, or a home appliance. The electronic device according to an embodiment of the present document is not limited to the above-described devices.

The various embodiments of the present document and terms used herein are not intended to limit the technical features described in the present document to specific embodiments, and should be understood to include various modifications, equivalents, or substitutes of the embodiment. In relation to the description of the drawings, a similar reference numeral may be used for a similar or related component. The singular form of the noun corresponding to the item may include one or a plurality of items unless explicitly indicated differently in the context involved. In the present document, each of the phrases such as "A or B", "at least one of A and B", "at least one of A or B", "A, B or C", "at least one of A, B and C", and "at least one of A, B or C" may include any one among the items listed together with the corresponding phrase among the phrases, or all possible combinations thereof. Terms such as "1st", "2nd", or "the first", or "the second" may be used simply to distinguish a corresponding component from another corresponding component, and do not limit the corresponding component to other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

The term "module" used in various embodiments of the present document may include units implemented in hardware, software, or firmware, and may be used interchangeably with terms such as logic, logic block, component, or circuit, for example. The module may be an integrally configured component or a minimum unit of the component or a part thereof that performs one or more functions. For example, according to an embodiment, the module may be implemented in the form of an application-specific integrated circuit (ASIC).

Various embodiments of the present document may be implemented as a software (e.g., a program 140) including one or more instructions stored in a storage medium (e.g., an internal memory 136 or an external memory 138) that may be read by a machine (e.g., an electronic device 101). For example, a processor (e.g., a processor 120) of the machine (e.g., the electronic device 101) may call at least one instruction among one or more instructions stored from the storage medium and execute it. This makes it possible for the machine to be operated to perform at least one function according to the at least one instruction called. The one or more instructions may include code generated by a compiler or code that may be executed by an interpreter. The machine-readable storage medium may be provided in the form of a non-transitory storage medium. Here, 'non-transitory' only means that the storage medium is a tangible device and does not include a signal (e.g., electromagnetic waves), and this term does not distinguish between a case where data is semi-permanently stored in the storage medium and a case where data is temporarily stored.

According to an embodiment, a method according to various embodiments disclosed in the present document may be included in a computer program product and provided. The computer program product may be traded between a seller and a buyer as a product. The computer program product may be distributed in the form of machine-readable storage medium (e.g., compact disc read only memory (CD-ROM)), or may be distributed (e.g., downloaded or uploaded) online, through an application store (e.g., Play Store™) or directly between two user devices (e.g., smartphones). In case of the online distribution, at least a portion of the computer program product may be at least temporarily stored or temporarily generated in the machine-readable storage medium, such as the memory 130 of a manufacturer's server, an application store's server, or a relay server.

According to various embodiments, each component (e.g., module or program) of the above-described components may include a single or plural entity, and some of the plurality of entities may be separately disposed in other components. According to various embodiments, one or more components among the above-described corresponding components or operations may be omitted, or one or more other components or operations may be added.

Alternatively or additionally, a plurality of components (e.g., module or program) may be integrated into one component. In this case, the integrated component may perform one or more functions of each component of the plurality of components identically or similarly to those performed by the corresponding component among the plurality of components prior to the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device comprising:

   a housing including a first housing part and a second housing part movably coupled to the first housing part;
   a wireless communication circuit disposed within the housing; and
   a display including a first display area, and a second display area extending from the first display area and at least partially rollable into the first housing part based on a movement of the second housing part,
   wherein the first housing part comprises:

   a first surface facing a direction of the first display area,
   a second surface opposite to the first surface, and a third surface between the first surface and the second surface,
   a first non-conductive portion disposed between a first edge of the third surface in contact with the first surface and a second edge of the third surface in contact with the second surface,
   a first conductive portion disposed between the first edge and the first non-conductive portion, and
   a second conductive portion disposed between the second edge and the first non-conductive portion, and

   wherein the wireless communication circuit is configured to communicate with an external electronic device through the second conductive portion.

2. The electronic device of claim 1,

   wherein the first conductive portion extends from a third edge of the first surface opposite to the first edge to the first non-conductive portion in the second surface, and
   wherein a distance between the second display area and the second conductive portion is greater than a distance between the second display area and the first conductive portion.

3. The electronic device of claim 1 or 2,

   wherein the first conductive portion extends from a third edge of the first surface opposite to the first edge to the first non-conductive portion in the second surface, and
   wherein the first housing part further comprises:

   a second non-conductive portion in contact with one end of the first non-conductive portion and extending from the third edge to the second edge, and
   a third non-conductive portion in contact with the other end of the first non-conductive portion opposite to the one end and extending from the third edge to the second edge.

4. The electronic device of claim 3,
   wherein the second conductive portion is surrounded by the second edge, the first non-conductive portion, the second non-conductive portion, and the third non-conductive portion.

5. The electronic device of claim 3 or 4,
   wherein the first housing part further comprises:

   a third conductive portion disposed on one side of the first conductive portion and the second conductive portion and in contact with the second non-conductive portion,
   a fourth conductive portion disposed on the other side of the first conductive portion and the second conductive portion opposite to the one side and in contact with the third non-conductive portion, and

a bridge in contact with the first conductive portion and the third conductive portion to electrically connect the first conductive portion and the third conductive portion.

6. The electronic device of claim 5,

   wherein the third conductive portion is electrically connected to a ground reference of the electronic device, and wherein the first conductive portion is electrically connected to the ground reference through the bridge and the third conductive portion.

7. The electronic device of any one of claims 3 to 6, wherein the first housing part further comprises a fourth non-conductive portion extending from the third edge of the first surface opposite the first edge to the first non-conductive portion in the third surface and disposed between the second non-conductive portion and the third non-conductive portion,

   wherein the first conductive portion includes a fifth conductive portion and a sixth conductive portion separated by the fourth non-conductive portion,
   wherein the wireless communication circuit transmits and/or receives a signal on a first frequency band through the second conductive portion and transmits or receives a signal on a second frequency band different from the first frequency band through the fifth conductive portion or the sixth conductive portion.

8. The electronic device of any one of claims 1 to 7, further comprising a connecting structure connected to an inner surface of the first conductive portion and an inner surface of the second conductive portion by extending from the first non-conductive portion to the inner surface of the first housing part,
   wherein the connecting structure fixes the first conductive portion and the second conductive portion.

9. The electronic device of any one of claims 1 to 8, further comprising:

   a first substrate disposed within the second housing part, and
   a second substrate electrically connected to the first substrate and disposed within the first housing part,
   wherein the wireless communication circuit is disposed on the first substrate, and
   wherein the second substrate is disposed on the third surface and is electrically connected to the second conductive portion.

10. The electronic device of claim 9, further comprising a conductive connecting member electrically connecting the second substrate and the second conductive portion by being in contact with each of the second substrate and the second conductive portion.

11. The electronic device of claim 9 or 10,
    wherein the second substrate is fused to a part of the second conductive portion.

12. The electronic device of any one of claims 9 to 11,
    wherein a feeding signal provided from the wireless communication circuit to the second conductive portion is provided from the first substrate to the second substrate through a third substrate electrically connecting the first substrate and the second substrate and is provided from the second substrate to the second conductive portion.

13. The electronic device of any one of claims 1 to 12,

    wherein the second housing part is movably coupled to the first housing part in a first direction and in a second direction opposite to the first direction,
    wherein the second display area is rolled into the first housing part in a first state in which the second housing part is movable only in the first direction of the first direction and the second direction, and
    wherein the second display area is at least partially exposed to the outside of the first housing part in a second state in which the second housing part is movable only in the second direction of the first direction and the second direction.

14. The electronic device of claim 13,
    wherein the second display area is covered by the first surface, the second surface, and the third surface in the first state.

**15.** The electronic device of any one of claims 1 to 14,
wherein the first display area is located closer to the first conductive portion than to the second conductive portion.

EP 4 672 497 A1

FIG. 1

101

A →    220

250-1

230a

230

210

261

263    264

262

y
x   z

FIG. 2A

<u>101</u>

250-2    220

212a

264    261

210    212    263

262

y

z    x

FIG. 2B

101

FIG. 2C

101

250-2

220

212a

210

212

261

264 263

262

y

z    x

FIG. 2D

FIG. 3A

101

331

230

313a

361
362    360
363

311a

313

311

313a

212a

212

321    322

220

210 { 311
      212
      313

x    y

z

FIG. 3B

FIG. 4A

FIG. 4B

101

230a

230

220

201

210

261

262

z

y

x

511

523

512

521

C

C'

542

543

513

541

522

521

531

513

541a

541b

533

534

542

541

532

522

543

FIG. 5A

FIG. 5B

101

230a

230

261

262

z
y
x

220

210

201

512

511

523

521

542

513

522

541

543

521

531

513

541a

541b

533

534

542

541

532

522

543

FIG. 5C

101

FIG. 6A

101

FIG. 6B

FIG. 6C

FIG. 7A

FIG. 7B

FIG. 7C

FIG. 7D

FIG. 8A

FIG. 8B

FIG. 9

FIG. 10A

FIG. 10B

FIG. 10C

FIG. 10D

FIG. 11

FIG. 12A

FIG. 12B

101

580    513    562

532

550

541    230b

230a

531

230

FIG. 12C

FIG. 13A

FIG. 13B

101

FIG. 13C

## INTERNATIONAL SEARCH REPORT

International application No.

**PCT/KR2024/003047**

| A. | CLASSIFICATION OF SUBJECT MATTER |
|---|---|

**H01Q 1/24**(2006.01)i; **H01Q 5/30**(2015.01)i; **H04M 1/02**(2006.01)i

According to International Patent Classification (IPC) or to both national classification and IPC

| B. | FIELDS SEARCHED |
|---|---|

Minimum documentation searched (classification system followed by classification symbols)

H01Q 1/24(2006.01); G06F 1/16(2006.01); H01Q 1/38(2006.01); H04M 1/02(2006.01); H05K 1/02(2006.01); H05K 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전자 장치(electronic device), 하우징(housing), 무선 통신 회로(wireless communication circuit), 굴곡(bend), 디스플레이(display), 비도전성 부분(non-conductive part), 도전성 부분(conductive part)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0062855 A (SAMSUNG ELECTRONICS CO., LTD.) 07 June 2019 (2019-06-07) See paragraphs [0028]-[0034]; and figures 1-2. | 1-4 |
| Y | KR 10-2021-0145381 A (SAMSUNG ELECTRONICS CO., LTD.) 02 December 2021 (2021-12-02) See paragraphs [0072]-[0075]; and figure 7b. | 1-4 |
| A | JP 2004-207447 A (KYOCERA CORP) 22 July 2004 (2004-07-22) See claims 1-5; and figure 1. | 1-4 |
| A | US 2014-0211399 A1 (MICROSOFT CORPORATION) 31 July 2014 (2014-07-31) See paragraphs [0020]-[0035]; and figures 2-3. | 1-4 |
| A | KR 10-2021-0055660 A (SAMSUNG ELECTRONICS CO., LTD.) 17 May 2021 (2021-05-17) See claims 1-3; and figure 21c. | 1-4 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 June 2024** | **19 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/003047** |

| Box No. II      Observations where certain claims were found unsearchable (Continuation of item 2 of first sheet) |
| --- |

This international search report has not been established in respect of certain claims under Article 17(2)(a) for the following reasons:

1. ☐   Claims Nos.:
   because they relate to subject matter not required to be searched by this Authority, namely:

2. ☑   Claims Nos.: **6, 10, 14**
   because they relate to parts of the international application that do not comply with the prescribed requirements to such an extent that no meaningful international search can be carried out, specifically:

   Claims 6, 10 and 14 refer to claims violating the manner of referring to multiple dependent claims (PCT Rule 6.4(a)), and thus are unclear.

3. ☑   Claims Nos.: **5, 7-9, 11-13, 15**
   because they are dependent claims and are not drafted in accordance with the second and third sentences of Rule 6.4(a).

Form PCT/ISA/210 (continuation of first sheet) (July 2022)

INTERNATIONAL SEARCH REPORT
Information on patent family members

International application No.

**PCT/KR2024/003047**

| Patent document cited in search report | | | Publication date (day/month/year) | Patent family member(s) | | | Publication date (day/month/year) |
|---|---|---|---|---|---|---|---|
| KR | 10-2019-0062855 | A | 07 June 2019 | EP | 3702880 | A1 | 02 September 2020 |
| | | | | EP | 3702880 | B1 | 04 January 2023 |
| | | | | EP | 4156658 | A1 | 29 March 2023 |
| | | | | KR | 10-2389189 | B1 | 22 April 2022 |
| | | | | US | 11194363 | B2 | 07 December 2021 |
| | | | | US | 11630490 | B2 | 18 April 2023 |
| | | | | US | 2020-0363841 | A1 | 19 November 2020 |
| | | | | US | 2022-0057843 | A1 | 24 February 2022 |
| | | | | US | 2023-0244279 | A1 | 03 August 2023 |
| | | | | WO | 2019-107909 | A1 | 06 June 2019 |
| KR | 10-2021-0145381 | A | 02 December 2021 | EP | 4131902 | A1 | 08 February 2023 |
| | | | | US | 2023-0092831 | A1 | 23 March 2023 |
| | | | | WO | 2021-241887 | A1 | 02 December 2021 |
| JP | 2004-207447 | A | 22 July 2004 | CN | 1270502 | C | 16 August 2006 |
| | | | | CN | 1510887 | A | 07 July 2004 |
| | | | | JP | 2004-207446 | A | 22 July 2004 |
| | | | | JP | 2004-228503 | A | 12 August 2004 |
| | | | | JP | 2008-104234 | A | 01 May 2008 |
| | | | | JP | 4051297 | B2 | 20 February 2008 |
| | | | | JP | 4080863 | B2 | 23 April 2008 |
| | | | | JP | 4094420 | B2 | 04 June 2008 |
| | | | | JP | 4325953 | B2 | 02 September 2009 |
| | | | | US | 2004-0198417 | A1 | 07 October 2004 |
| | | | | US | 7248903 | B2 | 24 July 2007 |
| US | 2014-0211399 | A1 | 31 July 2014 | CN | 102902308 | A | 30 January 2013 |
| | | | | CN | 102902308 | B | 17 August 2016 |
| | | | | EP | 2751639 | A2 | 09 July 2014 |
| | | | | EP | 2751639 | B1 | 16 November 2016 |
| | | | | ES | 2616031 | T3 | 09 June 2017 |
| | | | | HK | 1178634 | A1 | 13 September 2013 |
| | | | | JP | 2014-531796 | A | 27 November 2014 |
| | | | | JP | 6151253 | B2 | 21 June 2017 |
| | | | | KR | 10-1993390 | B1 | 26 June 2019 |
| | | | | KR | 10-2014-0059274 | A | 15 May 2014 |
| | | | | KR | 10-2019-0077107 | A | 02 July 2019 |
| | | | | KR | 10-2113963 | B1 | 21 May 2020 |
| | | | | TW | 201315196 | A | 01 April 2013 |
| | | | | TW | I584626 | B | 21 May 2017 |
| | | | | US | 2013-0058063 | A1 | 07 March 2013 |
| | | | | US | 8711566 | B2 | 29 April 2014 |
| | | | | US | 9195272 | B2 | 24 November 2015 |
| | | | | WO | 2013-033479 | A2 | 07 March 2013 |
| | | | | WO | 2013-033479 | A3 | 25 April 2013 |
| KR | 10-2021-0055660 | A | 17 May 2021 | KR | 10-2020-0117959 | A | 14 October 2020 |
| | | | | KR | 10-2022-0100844 | A | 18 July 2022 |
| | | | | KR | 10-2023-0088647 | A | 20 June 2023 |
| | | | | KR | 10-2251893 | B1 | 14 May 2021 |
| | | | | KR | 10-2420092 | B1 | 12 July 2022 |
| | | | | KR | 10-2580692 | B1 | 27 September 2023 |

Form PCT/ISA/210 (patent family annex) (July 2022)